# FASCICULE DE BREVET EUROPEEN

(11) **EP 1 805 444 B1**
(45) Date de publication et mention de la délivrance du brevet: **08.04.2009**
(21) Numéro de dépôt: 05807550.8
(22) Date de dépôt: 28.09.2005
(51) Int. Cl.: F16L 13/02

(54) **CONDUITE SOUS-MARINE COMPORTANT UNE CHEMISE INTERNE**
UNTERWASSERROHR MIT INNENAUSKLEIDUNG
UNDERWATER PIPE COMPRISING AN INTERNAL LINER

(30) Priorité: 19.10.2004 FR 0411055
(43) Date de publication de la demande: 11.07.2007
(73) Titulaire: Saipem SA, 78180 Montigny-le-Bretonneux (FR)
(72) Inventeur: PIONETTI, François-Régis, F-50450 La Baleine (FR)
(74) Mandataire: Domange, Maxime
(86) Numéro de dépôt international: PCT/FR2005/002395
(87) Numéro de publication internationale: WO 2006/042925

(56) Documents cités:
- EP-A- 0 722 824
- EP-A- 1 371 891
- WO-A-20/04011840

## Description

La présente invention concerne le domaine des conduites sous-marines véhiculant des fluides corrosifs, et notamment de l'eau de mer, et comportant un chemisage interne rapporté par enfilage, ledit chemisage étant résistant à ladite corrosion.

Elle concerne plus particulièrement le raccordement de deux éléments unitaires de conduite à chemisage interne, et plus particulièrement encore d'éléments de 24 m ou 48 m de longueur installées sur des champs pétrolifères en mer profonde, par 2000 à 3000 m, voire plus, à partir de navire de pose équipés de tours de pose en J.

La réhabilitation des réseaux d'eau, de gaz, ainsi que des égouts a vu se développer de longue date des technologies dites "sans tranchée", c'est-à-dire des technologies qui consistent à insérer, à l'intérieur de la conduite existante, une chemise tubulaire, en général en matériau souple tel des thermoplastiques, des thermodurcissables ou des matériaux composites thermodurcissables, lesdites chemises étant soit insérées après repliement sur elles-mêmes le long d'une génératrice longitudinale pour former une section transversale en forme de haricot, puis remises au rond par simple pressurisation interne, soit encore étirées par mise en traction pour que le diamètre de ladite chemise se réduise à une valeur inférieure au diamètre intérieur de ladite conduite. Dans ce dernier cas, en fin d'enfilage, la tension dans la chemise est relâchée et ladite chemise reprend alors son diamètre initial et vient se plaquer naturellement sur la face interne de ladite conduite. Ce dernier mode d'insertion est connu sous le nom de Swagelining et est mis en oeuvre couramment pour la réhabilitation des conduites d'eau ou de gaz, sur des distances unitaires pouvant atteindre 500m, voire un kilomètre en ligne droite.

Cette technologie est aussi mise en oeuvre dans le cas de transport de fluides corrosifs sous forte pression, ce qui permet d'utiliser une conduite résistant à la pression en acier au carbone classique, donc peu coûteux et facile à mettre en oeuvre par soudure, la résistance à la corrosion étant assurée par la chemise interne. On réalise ainsi des longueurs unitaires pouvant atteindre plusieurs centaines de mètres qu'il convient alors de raccorder entre elles tout en assurant une continuité de la protection à la corrosion. Trois types de connexions sont couramment utilisés : la liaison par brides, le joint vissé et lé joint soudé. Dans le cas du raccordement par brides, il suffit de retourner la chemise sur la face de la bride, le serrage des brides venant alors pincer les chemises face à face, assurant ainsi la continuité de la fonction anti-corrosion. Dans le cas des joints vissés, on assure par exemple la continuité par une bague munie de joints qui assure l'étanchéité avec chacune des chemises amont et aval. Dans le cas de joints soudés, il convient d'arrêter la chemise à une distance significative, par exemple 100 à 200 mm de l'extrémité de la conduite, de manière à ce que l'échauffement de la paroi en acier lors du soudage, ne vienne pas endommager ladite chemise. Le problème qui se pose alors est d'assurer la protection contre la corrosion de la zone non chemisée comprise entre l'extrémité de la chemise de la conduite N et l'extrémité de la chemise de la conduite suivante N+1.

On connaît le brevet GB-2,218,488 qui décrit la méthode dite de "Swagelining" consistant à étirer une conduite circulaire en matériau souple, appelée ci-après "chemise", de manière à réduire son diamètre pour pouvoir l'insérer dans une conduite par tirage, le diamètre au repos de ladite chemise étant supérieur au diamètre interne de ladite conduite. Une autre manière pour insérer une telle chemise est de la déformer en la pliant pour obtenir une section transversale en forme de "haricot" qui s'inscrit alors dans un cercle de diamètre beaucoup plus faible et autorise de ce fait l'insertion par simple tirage à travers la conduite en acier. En fin de tirage, les extrémités débordant largement reprennent naturellement une forme sensiblement circulaire et il est simple d'y ajuster un bouchon. En pressurisant la chemise à l'air comprimé, celle-ci reprend sa forme circulaire et ladite chemise vient se plaquer fermement sur la paroi interne de la conduite acier.

Le terme "chemise" correspond à un revêtement aussi connu dans le métier sous la dénomination de "liner".

On connaît le brevet GB-2,298,256, qui décrit un mode de raccordement de deux portions ou éléments de conduites chemisé(e)s en longueur courante par soudage, la zone non chemisée étant recouverte d'un alliage résistant à la corrosion, ledit alliage étant de préférence de l'inconel appliqué dans un processus de type arc électrique appelé "cladding". Les pièces sont ensuite ré-usinées pour présenter des formes de gorges assurant l'ancrage de ladite chemise par sertissage d'une virole interne, elle aussi en matériau résistant à la corrosion, de préférence en inconel. La préparation des extrémités des éléments de conduites représente un coût unitaire très important qui n'est en fait pas vraiment significatif dans le coût global lorsque l'on met en oeuvre des éléments de conduite de longueur unitaire importante, par exemple plusieurs centaines de mètres. Mais, ce coût devient rédhibitoire lorsque la longueur unitaire de chacun des éléments de conduite est de 24 ou 48 m. De plus, la soudure de raccordement doit être exécutée sur toute l'épaisseur de la conduite avec ce même métal noble, en général de l'inconel, ce qui complique considérablement le travail et engendre un coût très élevé, car la vitesse unitaire de dépôt massique de métal est beaucoup plus faible et le processus plus délicat à contrôler, que lors d'une soudure conventionnelle sur acier classique. Enfin le contrôle qualité de la soudure est très délicat et, pour certains types de matériau anti-corrosion, quasiment impossible à réaliser de manière fiable et répétitive, dans un temps limité.

On connaît le brevet GB-2,391,597, qui décrit un mode d'assemblage de deux conduites chemisées par insertion autour de chacune desdites chemises d'un manchon tubulaire de jonction venant se loger dans un rétrécissement d'épaisseur à l'extrémité de la paroi en acier chacun des deux élément de conduite à assembler. Ledit manchon de jonction est ensuite solidarisé auxdites chemises au moyen de viroles internes serties en expansion à l'aide d'un outil intérieur à la conduite, ledit outil étant opéré depuis l'extrémité libre de la conduite la plus proche. Dans ce brevet, chacune des extrémités des éléments de conduite est alésée de manière à créer le logement du manchon tubulaire de jonction, lequel sert d'appui pour le sertissage en expansion des viroles internes qui solidarisent les chemises audit manchon tubulaire de jonction. Le manchon tubulaire de jonction qui est en alliage résistant à la corrosion, est en contact direct avec la conduite en acier, en particulier dans la zone de soudage. Il peut en résulter un risque de dégradation lors du soudage si celui-ci n'est pas réalisé avec le même alliage et par corrosion au cas où il y aurait des infiltrations d'eau entre la chemise et la conduite externe en acier. De plus, la zone réalésée de ladite conduite externe en acier présente dans la zone de raccordement une épaisseur inférieure par rapport à la longueur courante, ce qui crée une zone de faiblesse.

On connaît le brevet WO-2004-015321, qui décrit un manchon tubulaire de jonction entre les extrémités non chemisées de deux éléments de conduite à assembler. Ce manchon tubulaire est réalisé en matériau résistant à la corrosion. Il présente, sur sa surface externe, des formes de gorge usinées, de diamètre extérieur inférieur au diamètre intérieur de la chemise, ladite virole étant sertie en expansion à l'aide d'un outil intérieur à la conduite, ledit outil étant opéré depuis l'extrémité libre de la conduite la plus proche. Dans ce brevet, le manchon tubulaire de jonction est coulissant dans l'alésage interne de la chemise et présente des rainures extérieures, l'ensemble doit être serti en expansion à l'aide d'un outil de sertissage lors de l'assemblage des extrémités de deux éléments de conduite à assembler sur site à bord de la tour de pose en J.

Dans GB-2,391,597 et WO-2004-015321, un outil de sertissage par expansion du manchon tubulaire de jonction ou d'autres éléments de raccordement, doit être positionné et opéré depuis l'extrémité libre de la conduite, c'est-à-dire à une distance de 24 à 48 m, dans le cas de la pose de telles conduites en mer à partir d'une tour de pose en J, ce qui représente une difficulté technique considérable tant sur le point opérationnel que sur le point du contrôle qualité du processus.

On connaît le brevet WO-2004-011840, qui décrit l'assemblage de deux éléments de conduite à l'aide d'un manchon tubulaire de jonction inséré au niveau des extrémités non chemisées des parois en acier de deux éléments de conduite à assembler. Ledit manchon tubulaire de jonction étant en matériau résistant à la corrosion et équipé de joints toriques d'étanchéité qui assurent l'étanchéité avec l'extrémité des chemises des deux éléments de conduite à assembler. Chacune des chemises est bloquées en position par une virole additionnelle à son extrémité, ladite virole étant, elle aussi, en matériau résistant à la corrosion. Ladite virole additionnelle est sertie en expansion contre les extrémités de ladite chemise. Ledit manchon tubulaire de jonction comporte à ses extrémités, une partie de sa surface externe en contact direct avec la paroi en acier des extrémités non chemisées des éléments de conduite à assembler. Ceci représente un risque de corrosion important en cas de mise en oeuvre d'un manchon tubulaire en alliage résistant à la corrosion de type inconel, lorsque l'on est en présence d'eau à l'interface entre le manchon tubulaire, la chemise et la paroi en acier des éléments de conduite.

Par ailleurs, ce brevet décrit en fait un mode d'assemblage de conduites chemisées destinées à véhiculer plus particulièrement du pétrole polyphasique, c'est-à-dire pouvant contenir du gaz et de l'eau, et donc nécessitant une "ventilation" de ladite chemise de manière à éviter que lors des dépressurisations de la conduite, le gaz ayant migré à travers la matière thermoplastique de ladite chemise, ne fasse s'effondrer ladite chemise sur elle-même. A cet effet, ladite chemise est équipée de micro-canaux permettant l'équilibrage de la pression de la chambre comprise entre ladite chemise et la conduite extérieure en acier, et l'intérieur de la conduite. Le manchon tubulaire de jonction présente des trous permettant d'équilibrer la pression entre chambre comprise entre ladite pièce de raccordement et la conduite extérieure en acier, et l'intérieur de la conduite. De plus le cheminement des gaz est assuré entre la partie gauche de la conduite N-1 et la partie droite de la conduite N.

Ce type de dispositif de chemisage et d'assemblage de deux éléments de conduite à assembler, tel que décrit dans WO 2004011840, avec des perforations permanentes dans le manchon tubulaire de jonction, lequel peut être en contact direct en partie avec la paroi en acier de la conduite, n'est donc pas adapté pour réaliser des conduites d'injection d'eau, et notamment des conduites d'injection d'eau de mer, et, d'autant plus, s'il s'agit d'eau de mer non passivée.

Le but de la présente invention est de fournir des procédés et dispositifs de chemisage de conduites sous-marines, et des procédés et dispositifs d'assemblage par soudage d'éléments de conduite ainsi chemisés, qui soient à la fois fiables mécaniquement, et plus simples et moins coûteux à réaliser, notamment dans le cas d'un assemblage, sur site à partir d'un navire en mer, d'éléments de conduite de longueur réduite adaptés à la pose à partir d'un navire en mer.

Plus particulièrement, un but de la présente invention est de fournir de tels procédés et dispositifs de chemisage et assemblage d'éléments de conduite qui requièrent un nombre minimal de pièces pour le raccordement des extrémités non chemisées des éléments de conduites à assembler et qui ne requièrent pas la mise en oeuvre d'outils spécifiques, tels que des outils de sertissage, lors de l'assemblage des deux éléments de conduite chemisée.

Un autre but de la présente invention est de fournir des dispositifs et procédés de chemisage et assemblage d'éléments de conduite destinés à réaliser des conduites aptes à être posées à grande profondeur et, plus particulièrement encore, des conduites aptes à servir à l'injection d'eau et, notamment, d'injection d'eau de mer.

Pour ce faire, la présente invention fournit une conduite comprenant au moins 2 éléments de conduite à chemisage interne assemblés bout à bout, dans laquelle les extrémités des deux éléments de conduite sont soudées l'une à l'autre et chaque élément de conduite comprend :
- un chemisage interne en matériau plastique, de préférence thermoplastique, présentant à chaque extrémité une partie terminale d'épaisseur réduite par rapport à l'épaisseur de la partie courante dudit chemisage, définissant une surface interne de révolution de diamètre interne plus grand que celui de la partie courante dudit chemisage et se terminant à une certaine distance de l'extrémité du dit élément de conduite, et
- un unique manchon tubulaire de jonction en matériau résistant à la corrosion, de préférence du type acier inox ou alliage inconel, sensiblement de même diamètre interne que ledit chemisage, intercalé à l'intérieur des extrémités bout à bout des deux éléments de conduite, de manière à chevaucher lesdites parties terminales d'épaisseur réduite des deux chemisages, ledit manchon présentant à chacune de ses extrémités une partie terminale d'épaisseur réduite par rapport à l'épaisseur de la partie centrale dudit manchon, lesdites parties terminales du manchon définissant une surface externe ,de préférence de révolution, de diamètre externe inférieur à celui de la partie centrale du manchon et une surface interne cylindrique sensiblement de même diamètre interne que celui des surfaces internes cylindriques de la partie courante du chemisage et de la partie centrale du manchon.

Selon la présente invention :
- la surface externe de chaque dite partie terminale d'épaisseur réduite du chemisage interne est verrouillée par collage de l'extrémité du chemisage au niveau ou à proximité de ladite partie terminale d'épaisseur réduite du chemisage contre la surface interne correspondante de la paroi en acier de la conduite, à l'aide d'une colle de préférence de type époxy ou polyuréthanne, et
- ladite surface externe de chaque partie terminale dudit manchon est une surface crantée,de préférence de révolution, avec une extrémité sensiblement effilée en biseau permettant son insertion et ancrage contre la surface interne de la partie terminale du chemisage correspondante, réalisant ainsi une liaison mécanique entre les deux dites surfaces externe du manchon et interne du chemisage, par simple encastrement en force dudit manchon dans la direction longitudinale axiale à l'intérieur dudit élément de conduite, et
- le diamètre externe de ladite partie centrale cylindrique du manchon est inférieure au diamètre interne des extrémités non chemisées des parois en acier dits éléments de conduite de sorte que ledit manchon n'est pas en contact direct avec lesdites parois en acier et délimite avec celles-ci et entre les extrémités des chemises encadrant ledit manchon, une chambre annulaire.

On entend par "interne" et "externe", interne et respectivement externe à la conduite, au manchon ou au chemisage selon les cas.

La réalisation d'éléments de conduite à chemisage interne équipés à une extrémité d'un dit manchon et l'assemblage d'éléments de conduite ainsi chemisé et équipés d'un dit manchon tubulaire répond aux buts de la présente invention.

On comprend que le verrouillage de la partie terminale du chemisage par collage ne requiert pas la mise en oeuvre de virole de verrouillage ou autre vissage ou sertissage de collier, et le verrouillage du manchon de jonction ne requiert pas non plus la mise en oeuvre d'une virole de verrouillage ou vissage ou autre outil de sertissage par déformation du dit manchon, et ce aussi bien lors de la réalisation préalable de l'élément de conduite que lors de l'assemblage de deux éléments de conduite.

La surface interne de chacune des parties terminales de chemisage est sensiblement cylindrique et flue lors de l'insertion en force dudit manchon et de la déformation élastique de sa surface externe crantée par pression de la surface externe crantée de celui-ci contre ladite surface interne du chemisage.

Après jonction de deux éléments de conduite, la surface externe de la partie centrale du manchon et la surface interne correspondante de la paroi en acier de la partie terminale non chemisée dudit élément de conduite, délimitent une chambre annulaire, de par la différence de leurs diamètres respectivement externe et interne. Ceci permet d'éviter tout contact direct entre l'alliage inox ou inconel du manchon et l'acier de l'élément de conduite. Un tel contact direct pourrait en effet conduire, en cas de pénétration d'eau dans la dite chambre lorsque la conduite est une conduite d'injection d'eau, à des phénomènes électrochimiques de corrosion de la conduite en acier dans la mesure ou ladite liaison mécanique entre le manchon et le chemisage n'est pas nécessairement étanche. L'absence de contact entre le manchon et la paroi en acier de la conduite, permet la mise en oeuvre une soudure classique du type utilisé couramment pour le soudage des pipelines et permet d'éviter une soudure coûteuse en alliage noble identique à celui éventuellement mise en oeuvre comme matériau constitutif dudit manchon, notamment de l'alliage inconel.

Toutefois, dans un mode de réalisation, ledit manchon tubulaire de jonction peut être réalisé en matériau composite du type carbone époxy, ledit manchon étant réalisé par exemple par enroulement filamentaire, sous forme d'ébauche, puis réusiné dans les zones d'extrémité pour former les crantages requis.

Plus particulièrement, la présente invention a pour objet une conduite apte à être posée en milieu sous-marin à grande profondeur, de préférence jusqu'à 3000m, et lesdits éléments de conduite ont une longueur de 20 à 50m.

Plus particulièrement encore, il s'agit d'une conduite destinée à l'injection d'eau, notamment d'eau de mer, voire de l'eau de mer non passifiée, dans les champs d'exploitation pétrolifères.

La présente invention fournit également un élément de conduite à chemisage interne utile pour réaliser une conduite selon l'invention, **caractérisé en ce qu**'il comprend un chemisage avec une partie terminale d'épaisseur réduite à chaque extrémité, tel que défini ci-dessus, et un dit manchon tubulaire de jonction inséré à seulement une de ses extrémités et dépassant de celle-ci, le dépassement dudit manchon définissant une extrémité mâle dudit élément de conduite apte à être rassemblé avec une extrémité dépourvue de dit manchon définissant une extrémité femelle d'un autre dit même élément de conduite.

La présente invention a également pour objet un procédé de réalisation d'une conduite selon l'invention par assemblage d'éléments de conduite selon l'invention, **caractérisé en ce que** l'on introduit et insère en force l'extrémité femelle dépourvue de manchon tubulaire de jonction d'un élément de conduite à assembler autour de l'extrémité mâle du manchon tubulaire de jonction fixe qui dépasse de l'élément de conduite terminal d'une conduite en cours d'assemblage, dans la direction longitudinale XX' axialement à l'intérieur de la dite extrémité femelle, puis on réalise le soudage des extrémités non chemisées des parois en acier des deux éléments de conduite bout à bout.

Dans un mode de réalisation, on injecte un dit matériau réticulable ou dit gel, à travers un trou préalablement percé dans la paroi dudit manchon ou ladite paroi en acier de la conduite et par l'intermédiaire d'une chambre à vide adapté au regard dudit trou, après avoir réalisé le vide dans ladite chambre annulaire, puis on démonte ladite chambre à vide et on bouche ledit trou.

La présente invention a également pour objet un procédé de réalisation d'un élément de conduite selon l'invention, **caractérisé en ce que** l'on réalise les étapes suivantes comprenant :
1- ledit chemisage interne en introduisant, par une première extrémité d'un élément de conduite, une conduite en matériau thermoplastique souple et élastique en forme de conduite à section circulaire ou pliée en forme de haricot, destinée à former ladite chemise, et en la tirant à l'intérieur dudit élément de conduite jusqu'à la seconde extrémité de l'élément de conduite, puis on relâche la traction pour permettre son expansion radiale et son collage contre la surface interne de la paroi dudit élément de conduite, et
2- le découpage et l'usinage des extrémités de ladite conduite de chemisage de façon à former desdites parties terminales d'épaisseur réduite de ladite chemise interne et une partie terminale non chemisée de la paroi en acier dudit élément de conduite à chacune de ses extrémités.

Selon une autre caractéristique avantageuse du procédé de réalisation d'un élément de conduite selon l'invention, la surface externe de la conduite thermoplastique de chemisage est revêtue de colle dans au moins une zone située à l'extérieur dudit élément de conduite, au moins du côté de ladite première extrémité dudit élément de conduite, après relâchement de la traction et rétractation complète de ladite conduite de chemisage, à proximité ou au niveau des parties terminales d'épaisseur réduite du chemisage.

Dans un mode préféré de réalisation, la surface externe de la conduite thermoplastique de chemisage est revêtue de colle dans deux zones situées à l'extérieur dudit élément de conduite, respectivement des deux côtés desdites première et deuxième extrémités dudit élément de conduite, et destinées à être positionnées après relâchement de la traction et rétractation complète de ladite conduite de chemisage, à proximité ou au niveau de chacune desdites parties terminales d'épaisseur réduite du chemisage.

Dans un autre mode de réalisation, avant l'étape 1-, la surface interne de ladite seconde extrémité de l'élément de conduite est revêtue d'une colle dans une première zone destinée à se trouver en vis-à-vis d'une première zone correspondante dudit chemisage correspondant à la proximité ou au niveau de ladite partie terminale d'épaisseur réduite du chemisage après usinage, et la surface externe de la conduite thermoplastique de chemisage est revêtue de colle à proximité ou au niveau d'une deuxième zone dudit chemisage destinée à former ladite partie terminale d'épaisseur réduite du chemisage du coté de ladite première extrémité dudit élément de conduite après usinage.

Selon une autre caractéristique avantageuse de la présente invention, on réalise un traitement par un plasma froid, à l'aide d'un dispositif situé à l'extérieur dudit élément de conduite, sur les zones des surfaces externes de la conduite thermoplastique de chemisage destinées à être encollées ou destinées à être appliquées contre une zone encollée de la paroi en acier d'un dit élément de conduite, pour favoriser l'efficacité du collage.

Dans un mode de réalisation particulier, la surface externe de la conduite thermoplastique de chemisage est traitée par un plasma froid au niveau d'une dite première zone de ladite conduite souple de chemisage destinée à être collée avec une dite première zone encollée 4b de la surface interne de la paroi en acier de ladite seconde extrémité dudit élément de conduite d'une part, et d'autre part, au niveau d'une seconde zone de la surface externe de ladite conduite souple de chemisage destinée à être ensuite encollée, ledit traitement au plasma étant réalisé avant introduction de ladite conduite souple de chemisage à l'intérieur dudit élément de conduite.

Avantageusement, on réalise ledit traitement plasma au niveau de ladite première zone de ladite conduite souple de chemisage selon une longueur supérieure à la somme à la longueur de rétractation de la dite conduite souple après relâchement de la traction sur ladite conduite de chemisage, additionnée de celle de ladite première zone encollée de la surface interne de la paroi en acier à ladite seconde extrémité de l'élément de conduite de façon à ce que lesdites premières zones se chevauchent sur toutes leurs longueurs depuis l'arrêt de la traction jusqu'à la rétractation complète de ladite conduite de chemisage après relâchement de ladite traction.

Pour ce faire, on comprend que l'on peut arrêter la traction de ladite conduite de chemisage lorsque l'arrière de ladite première zone de ladite conduite de chemisage arrive en correspondance avec ladite première zone encollée de la paroi en acier de la seconde extrémité de l'élément de conduite. Après relâchement de la traction, l'avant de ladite première zone de la conduite de chemisage arrivera en correspondance avec ladite première zone encollée de l'élément de conduite.

De préférence, avant l'étape 1-, on réalise le chauffage de ladite conduite thermoplastique de chemisage pour faciliter son étirement à diamètre réduit, de préférence par le passage dans une filière.

On comprend que ladite conduite en matériau souple présente, avant chauffage et traction au repos, un diamètre externe supérieur au diamètre interne de l'élément de conduite, et elle est introduite et étirée par chauffage et traction sous une forme présentant une section sensiblement circulaire de diamètre réduit.

D'autres caractéristiques et avantages de la présente invention apparaîtront à la lumière de la description détaillée qui va suivre, en référence aux figures suivantes dans lesquelles :
- la figure 1 est une coupe en vue de côté de l'assemblage d'une conduite selon l'invention, à l'aide d'un manchon tubulaire de jonction entre deux éléments de conduite ou longueurs unitaires de conduites chemisées selon l'invention,
- les figures 1a, 1b, 1c et 1d sont des coupes en vue de côté d'un élément de conduite constituant une longueur unitaire de conduite en acier à travers laquelle on insère une conduite de chemisage interne en matériau thermoplastique, respectivement en phase de démarrage de la traction (fig.1a), en phase d'arrêt du tirage pour encollage de ladite chemise (fig.1b), et en phase finale de traction avant relâchement de la tension de ladite chemise (fig.1c) et après relâchement (fig.1d),
- les figures 1e et 1f illustrent en coupe en vue de côté, une variante du mode d'insertion et de collage d'une chemise interne, respectivement en phase d'encollage (fig.1e) et en phase de relâchement de la tension de ladite chemise (1f),
- la figure 2a représente la section circulaire de la chemise au repos en l'absence de tension ou de déformation, correspondant au plan AA des figures 1a-1d,
- la figure 2b représente la section circulaire de diamètre réduit de la chemise soumise à la tension d'un treuil, et correspondant au plan BB des figures 1a-1c,
- la figure 2c représente une variante de réalisation avec la section de la chemise déformée "en haricot" pour être insérée dans la conduite,
- la figure 2d représente la section de la chemise déformée "en haricot" à l'aide d'un dispositif à 4 roulettes,
- les figures 3a et 3b sont des coupes en vue de côté d'un élément de conduite en acier à travers lequel a été tirée une chemise en matériau thermoplastique, cette dernière étant collée près de l'extrémité, en fin de processus de tirage respectivement avant (fig.3a) et en cours (fig.3b) d'usinage de ladite chemise,
- la figure 4 est une coupe en vue de côté d'un manchon tubulaire de jonction en matériau résistant à la corrosion, prêt à être inséré dans ladite chemise usinée de la figure 3b,
- la figure 4b détaille la surface crantée de l'extrémité du manchon tubulaire de jonction.
- la figure 5 est une coupe en vue de côté d'une longueur unitaire de conduite équipée de son manchon de jonction à son extrémité gauche et prête à être expédiée sur site pour installation,
- la figure 6a représente en vue de côté un navire d'installation équipé d'une tour de pose dite en "J",
- les figures 6b et 6c sont des coupes en vue de côté des phases d'assemblage de deux longueurs successives de conduites chemisées, respectivement en phase d'approche (fig.6a) et en phase de soudage (fig.6b),
- la figure 6d est une section relative à la figure 6b détaillant la position de cales de centrage proches de la zone de soudage,
- la figure 7 est une coupe au niveau du raccordement du manchon tubulaire de jonction et de la chemise, détaillant un mode d'injection d'un fluide dans la chambre annulaire comprise entre ledit manchon, les extrémités des chemises, et la conduite en acier, soit depuis l'extérieur, soit depuis l'intérieur,
- les figures 8a-8f sont des schémas résultant de calculs en éléments finis détaillant 6 phases de l'insertion du manchon et montrant la déformation du manchon ainsi que le fluage du matériau souple constituant la chemise,
- la figure 9a est un résultat de calcul en éléments finis détaillant la déformation du manchon et la plastification de la chemise lorsque la conduite est soumise à une pression interne, la chambre comprise entre ledit manchon, les extrémités des chemises, et la conduite en acier, restant sensiblement à la pression atmosphérique,
- la figure 9b est un détail de la surface externe crantée du manchon, correspondant à la figure 9a,

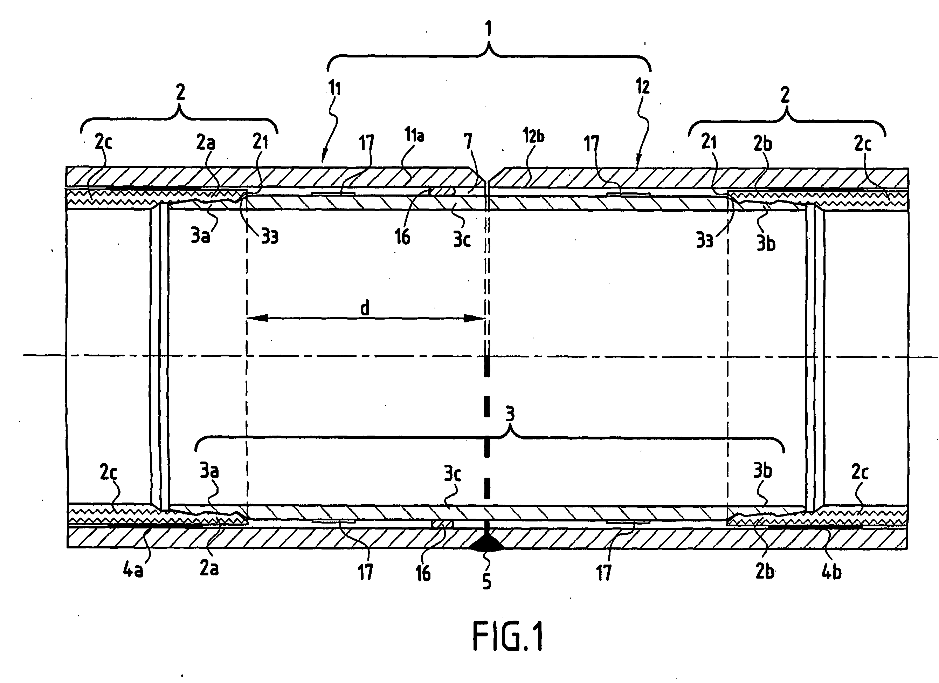

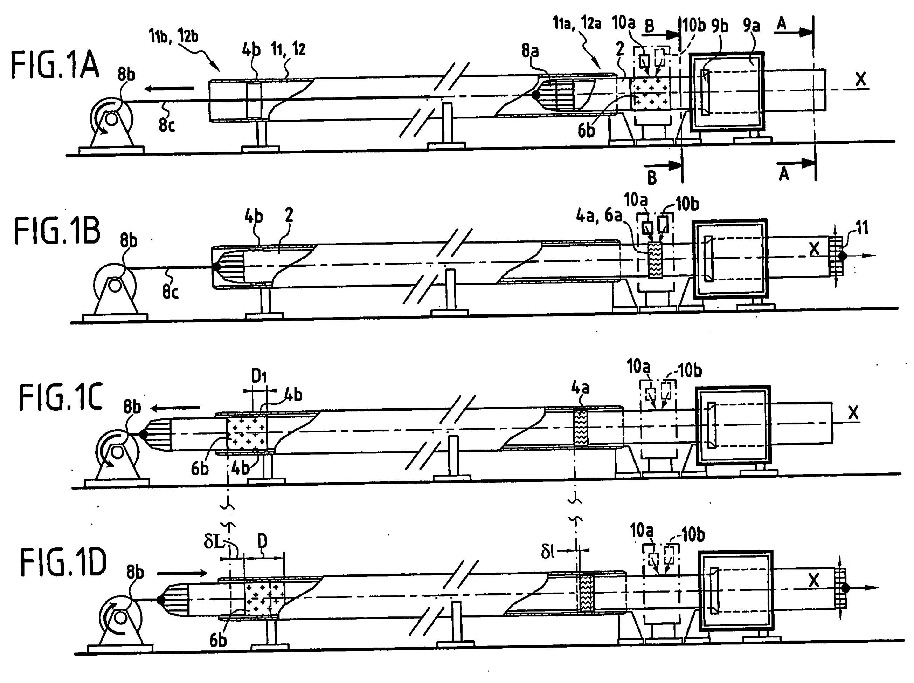

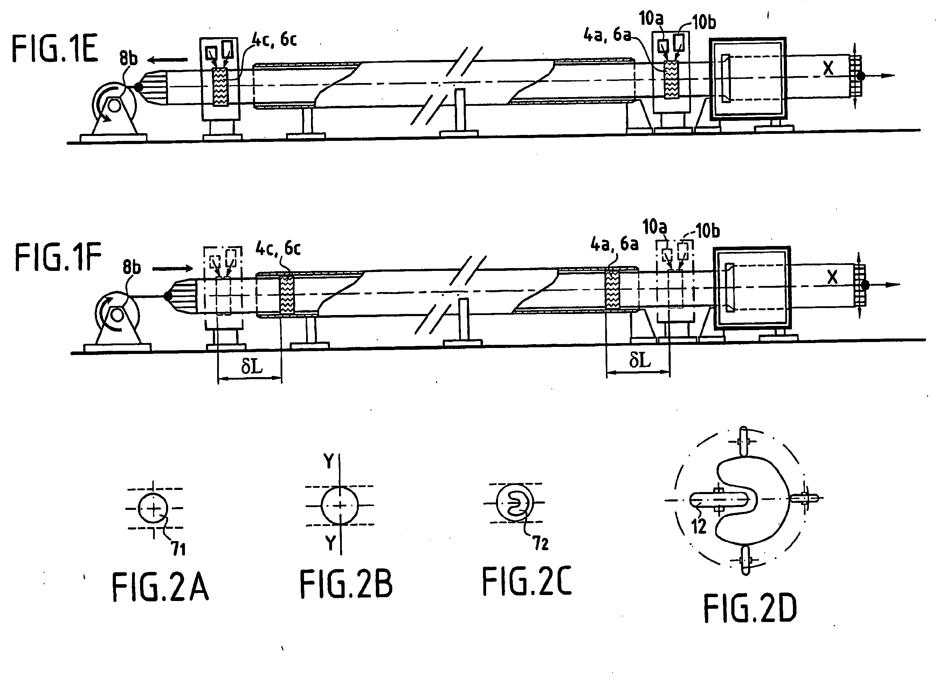

Sur la figure 1, on a représenté une conduite selon l'invention comprenant au moins 2 éléments de conduite 1₁, 1₂ à chemisage interne assemblés bout à bout, dans laquelle les extrémités des deux éléments de conduite sont soudées 5 l'une à l'autre et chaque élément de conduite comprend :
- un chemisage interne en matériau plastique 2 thermoplastique présentant à chaque extrémité une partie terminale d'épaisseur réduite 2a, 2b par rapport à l'épaisseur de la partie courante 2c dudit chemisage, définissant une surface interne de révolution de diamètre interne plus grand que celui de la partie courante 2c dudit chemisage et se terminant à une certaine distance d de l'extrémité du dit élément de conduite, et d'axe XX' coïncidant sensiblement avec l'axe des éléments de conduite 1₁, 1₂. La surface externe de chaque dite partie terminale 2a, 2b du chemisage interne est verrouillée par collage 4a, 4b de l'extrémité du chemisage au niveau ou à proximité de ladite partie terminale d'épaisseur réduite 2a, 2b du chemisage contre la surface interne correspondante de la paroi en acier de la conduite, à l'aide d'une colle, de préférence de type polyuréthanne ou époxy bi-composants, et
- un unique manchon tubulaire de jonction 3 en matériau résistant à la corrosion, de préférence en alliage inconel, sensiblement de même diamètre interne que ledit chemisage, intercalé à l'intérieur des extrémités bout à bout des deux éléments de conduite, de manière à chevaucher lesdites parties terminales des deux chemisages 2a, 2b, ledit manchon présentant à chacune de ses extrémités une partie terminale 3a, 3b d'épaisseur réduite par rapport à l'épaisseur de la partie centrale 3c dudit manchon, lesdites parties terminales 3a, 3b du manchon définissant une surface externe de révolution de diamètre externe inférieur à celui de la partie centrale 3c du manchon et une surface interne cylindrique de même diamètre interne que celui de la partie courante du chemisage et de la partie centrale 3c du manchon, son axe XX' coïncidant sensiblement avec l'axe des éléments de conduite 1₁, 1₂.

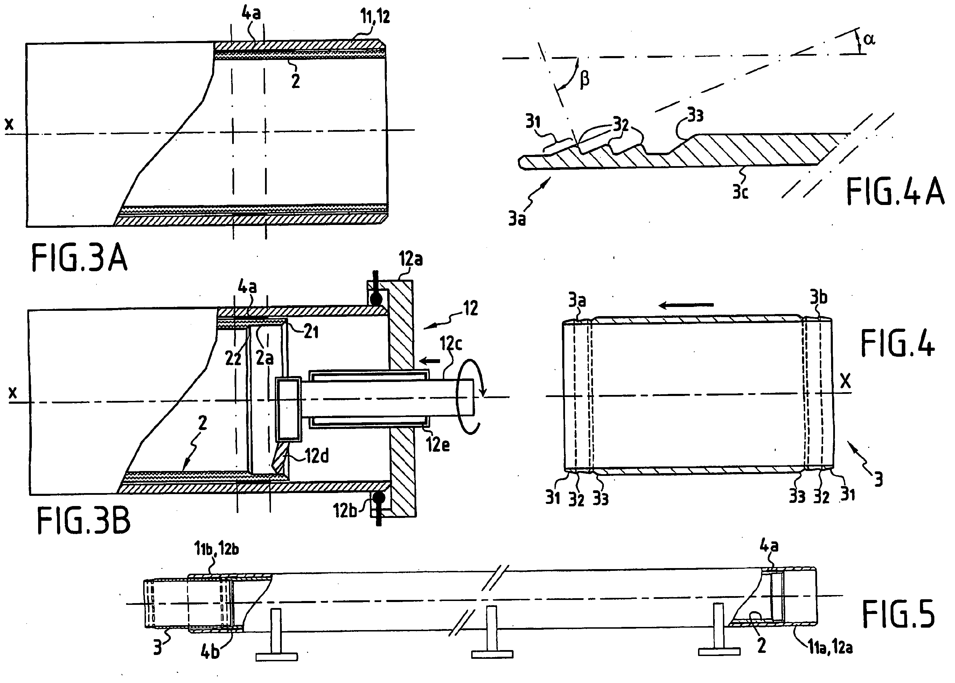

Ladite surface externe de révolution de chaque partie terminale 3a, 3b dudit manchon est une surface crantée 3₂, notamment avec 3 à 5 crans 3₂ dont les inclinaisons de pente, telles que représentées sur la figure 4a, à savoir α est inférieur à 45°, de préférence de l'ordre de 30°, et β est supérieur à 45°, de préférence de l'ordre de 60°, permettant son insertion et ancrage contre la surface interne de la partie terminale d'épaisseur réduite 2a, 2b du chemisage correspondant, le cran d'extrémité confère au manchon une extrémité sensiblement effilée en biseau 3₁, comme représenté sur la figure 4a. On réalise ainsi une liaison mécanique entre les deux dites surfaces externe du manchon et interne du chemisage, par simple encastrement en force dudit manchon dans la direction longitudinale axiale à l'intérieur dudit élément de conduite.

Le diamètre externe de ladite partie centrale 3c cylindrique du manchon est inférieure au diamètre interne des extrémités non chemisées 1₁a-1₁b, 1₂a-1₂b, des parois en acier dits éléments de conduite de sorte que ledit manchon n'est pas en contact direct avec lesdites parois en acier et délimite avec celles-ci et entre les extrémités 2₁ des chemises encadrant ledit manchon, une chambre annulaire 7.

Ledit manchon est inséré contre la partie terminale d'épaisseur réduite 2a, 2b, du chemisage jusqu'à ce que l'extrémité 2₁ du chemisage vienne buter contre un épaulement 3₃ délimitant la dite partie centrale 3c du manchon et la dite partie terminale de plus faible épaisseur 3a, 3b du manchon.

Dans une variante de réalisation non représentée, ledit manchon est inséré contre la partie terminale du chemisage jusqu'à ce que l'extrémité 3₁ du manchon vienne buter contre l'épaulement 2₂ délimitant la partie courante et la dite partie terminale 2a, 2b, d'épaisseur réduite du chemisage, ce qui réduit avantageusement les turbulences dans la zone de transition entre la partie courante de la chemise 2 et le manchon tubulaire de jonction.

Dans les figures 1a à 1d, on a représenté un procédé de réalisation d'un élément de conduite chemisé selon l'invention, dans lequel on réalise les étapes suivantes :
a- chauffage de la conduite de chemisage 2 en matériau thermoplastique souple et élastique, à section transversale circulaire 7₁, à l'aide d'une installation de chauffage 9a placée à l'extérieur de l'élément de conduite 1 à chemiser du coté d'une première extrémité, puis ladite conduite passe dans une filière 9b qui réduit alors son diamètre extérieur lorsque l'on exerce une tension axiale de traction, ledit diamètre extérieur étant inférieur audit diamètre intérieur de la conduite, et
b- on tire ladite conduite de chemisage à l'intérieur dudit élément de conduite jusqu'à la seconde extrémité dudit élément de conduite dont la surface interne est revêtue d'une colle 4b dans une première zone destinée à se trouver en vis-à-vis d'une première zone 6b de ladite conduite de chemisage, à proximité ou au niveau de ce qui constituera la partie terminale d'épaisseur réduite 2b de l'extrémité du chemisage après usinage comme explicité ci-après, et
c- la surface externe de la conduite thermoplastique de chemisage est traitée par un plasma froid au niveau d'une première zone 6b de ladite conduite souple de chemisage destinée à être collée avec une dite première zone encollée 4b de la surface interne de la paroi en acier de ladite seconde extrémité dudit élément de conduite, d'une part, et d'autre part, au niveau d'une seconde zone 6a de la surface externe de ladite conduite souple de chemisage destinée à être ensuite encollée 4a, ledit traitement au plasma étant réalisé avant introduction de ladite conduite souple de chemisage à l'intérieur dudit élément de conduite.
d- On réalise le découpage puis l'usinage des extrémités de ladite conduite de chemisage de façon à former desdites parties terminales d'épaisseur réduite 2a, 2b de ladite chemise interne et une partie terminale non chemisée 1₁a-1₁b, 1₂a-1₂b de la paroi en acier dudit élément de conduite à chacune de ses extrémités, comme explicité ci-après.

Dans les figures 1a à 1d, on a représenté de façon plus détaillée les diverses phases du tirage d'une conduite de chemisage 2 en matériau élastique, tel du polyéthylène, du polypropylène, du polyamide, ou encore un thermoplastique fluoré, à l'intérieur et travers un élément de conduite en acier 1₁, 1₂ depuis une première extrémité jusqu'à sa seconde extrémité, selon la méthode dite du "Swagelining". A cet effet, la chemise en l'absence de traction présente, au niveau du plan AA, un diamètre 1a supérieur de quelques mm, voire quelques cm au diamètre intérieur de la conduite 2. La chemise 1 est équipée d'une tête de traction 8a reliée à un treuil 8b à l'extérieur de l'élément de conduite du coté de sa deuxième extrémité, par un câble 8c traversant la conduite en acier sensiblement en son centre. Ladite chemise passe successivement dans un four de réchauffage 9a, puis dans une filière 9b, pour ressortir en direction de la conduite avec un diamètre extérieur inférieur de quelques mm, voire quelques cm au diamètre intérieur de l'élément de conduite. Durant cette traction, la chemise voit donc son diamètre réduire, mais aussi sa longueur nominale augmenter. Dans une phase de préparation du tirage, on encolle, avec une colle, de préférence époxy ou une colle polyuréthanne bi-composants, la paroi interne en acier de l'élément de conduite en acier dans une zone 4b située à environ 20 à 40 cm de ladite seconde extrémité, après avoir effectué une préparation de surface par brossage ou par sablage. On commence alors le tirage sur une longueur L, puis, comme indiqué sur la figure 1a, le processus de tirage est stoppé, et un dispositif équipé d'une torche plasma semi-froid 10a effectue un traitement de la zone 6b sur toute la périphérie de la chemise, qui viendra en fin de processus coopérer avec ladite zone préencollée 4b de l'intérieur de la conduite, comme explicité sur la figure 1d. Lorsque le traitement plasma est terminé, le tirage reprend jusqu'à atteindre la position indiquée sur la figure 1b où le tirage est alors stoppé par blocage en 11 de la conduite de chemisage. Une zone réduite 6a de l'extérieur de la conduite de chemisage est alors traitée sur sa périphérie au moyen de la torche plasma semi-froid 10a, puis encollée sur une épaisseur de 0.1 à 1 mm avec une colle de préférence de type époxy ou polyuréthanne bi-composants, au moyen d'une tête d'application 10b. Le tirage est alors repris pour atteindre la position représentée sur la figure 1c, la zone traitée plasma 6b de la chemise étant située en avant de la zone encollée 4b de l'élément de conduite. Dans cette position, la chemise 2 est bloquée en 11, puis la tension dans le treuil 8b est relâchée. La conduite de chemisage se rétracte alors selon son axe XX en raison de son élasticité et son diamètre externe augmente radialement jusqu'à venir en butée sur l'intérieur de l'élément de conduite. Du fait que la conduite de chemisage est bloquée en 11, le raccourcissement côté treuil 8b δL est beaucoup plus important que le raccourcissement δ1 côté dispositif de blocage 11. En raison de l'incertitude sur cette rétractation, la zone pré-traitée au plasma 6b doit être importante, de manière à être sûr que celle-ci vienne collaborer avec la zone pré-encollée 4b, quelque soit l'incertitude sur la valeur de δL.

Dans une version préférée illustrée sur les figures 1e et 1f, on installe un dispositif de traitement plasma 10a et d'encollage 10b à l'extérieur de l'élément de conduite en acier à chacune de ses extrémités. La traction est alors réalisée en une seule fois sans arrêt intermédiaire, ce qui évite la nécessité d'un arrêt intermédiaire. On réalise alors le traitement plasma et l'encollage de la conduite de chemisage à l'extérieur de l'élément de conduite dans deux zones 6a, 6c, de manière à ce que les zones à encoller 6a, 6c correspondantes se retrouvent simultanément hors de la conduite acier comme explicité sur la figure 1e, ce qui peut nécessiter une tension exercée sur la chemise nettement supérieure à celle qui est nécessaire lors de la procédure précédemment détaillée en regard des figures 1a-1d. Le traitement plasma est alors effectué, ainsi que l'encollage sur la périphérie, puis la tension dans la chemise est relâchée séquentiellement ou simultanément, de manière à ce que les zones de collage 4a, 4c se positionnent à l'endroit requis dans la conduite acier. Dans cette configuration, il est nécessaire de bien maîtriser le comportement de la chemise, de manière à ce que la rétractation de la chemise et son expansion en diamètre se fasse avec suffisamment de précision et que les collages soient correctement positionnés.

Le traitement plasma froid de la surface de la chemise permet, d'une part d'éliminer toute trace de pollution résiduelle, et d'autre part de casser les molécules de la paroi externe thermoplastique de ladite chemise, ce qui améliore de manière radicale l'accrochage des colles et notamment des colles de type époxy ou polyuréthanne, mono ou bi-composants. Ce traitement plasma est avantageusement effectué à l'aide d'une torche de type "Plasma Pen" disponible auprès de la Société PVA-Tepla France, ladite torche étant opérée soit manuellement, soit par un robot.

Sur la figure 2a, on a représenté la section circulaire de la conduite de chemisage au repos en l'absence de tension ou de déformation, correspondant au plan AA des figures 1a-1d. Sur la figure 2b, on a représenté la section de la chemise de diamètre réduit soumise à la tension d'un treuil et correspondant au plan BB des figures 1a-1c,

Dans les processus de tirage décrits précédemment dans les figures 1a à 1f, on remplace avantageusement la méthode de "Swagelining" par la méthode de réduction de diamètre dite du "haricot", connue de l'homme de l'art, illustrée sur la figure 2c où l'on a représenté la section de la chemise déformée "en haricot" pour être insérée dans la conduite. La figure 2d illustre le formage de la conduite de chemisage en "haricot" au moyen de quatre roulettes dont une roulette appuie et creuse le long d'une génératrice longitudinale de la conduite de chemisage. Dans le cas de la forme en "haricot" représenté sur la figure 2D, le traitement plasma ainsi que l'encollage ne pourront pas être effectués simplement sur toute la périphérie de la chemise, et en conséquence, on se contentera de traiter seulement la portion convexe représentée sur ladite figure, ce qui représente de 60 à 80% de la périphérie de ladite chemise. On compensera alors la surface manquante, en augmentant la longueur de chemise sur laquelle est effectué ledit traitement.

En fin de processus d'insertion et de collage, la chemise est alors découpée à ras de l'élément de conduite acier, puis une machine d'usinage 12 est installée sur la face de la première extrémité de l'élément de conduite, comme explicité sur les figures 3a-3b. Elle est constituée de façon connue d'un bâti 12a portant une motorisation, non représentée, qui met l'arbre porte-outil 12c en rotation, un dispositif 12e assure le déplacement du porte-outil dans la direction XX, un dispositif 12f assure le déplacement radial de l'outil d'usinage 12d. La machine est équipée de moyens de centrage 12b qui permettent d'ajuster l'axe XX de ladite machine pour le faire coïncider avec l'axe de l'élément de conduite, et ainsi pouvoir usiner l'intérieur de la chemise à ses extrémités, de manière parfaitement concentrique à ladite conduite en acier. Pour la clarté des dessins, sur les figures 3a-3b, la chemise 2 a été représentée légèrement distante de la paroi de l'élément de conduite en acier, de manière à mettre en évidence la position approximative de la zone encollée 4a par rapport à la zone de la partie terminale usinée d'épaisseur réduite 2a de ladite chemise. En fait, chemise et paroi sont en contact intime et le joint de colle 4a s'étale naturellement sur une surface importante, mais seule la zone de la chemise traitée au plasma présentera une adhérence importante et connue, les zones non traitées présentant une adhérence quasiment nulle.

Après usinage de la chemise selon le profil requis, à chacune des extrémités, le manchon tubulaire de jonction 3 de la figure 4 est enfoncée en force dans l'extrémité de l'élément de conduite chemisé, de préférence du côté gauche de la conduite, c'est-à-dire du côté treuil 8b. L'élément de conduite est alors terminé et prêt à être expédié sur le site d'assemblage, comme montré sur la figure 5. En procédant ainsi, l'extrémité libre de la chemise qui sera assemblée sur site, correspond à la zone d'encollage 4a qui est positionnée avec précision, comme explicité précédemment sur la figure 1d.

Ledit élément de conduite comprend un chemisage 2 avec une partie terminale d'épaisseur réduite 2a, 2b à chaque extrémité, tel que défini dans l'une des revendications 1 à 3, et un dit manchon tubulaire de jonction 3 inséré à seulement une de ses extrémités et dépassant de celle-ci, le dépassement dudit manchon définissant une extrémité mâle 3₄ dudit élément de conduite 1₁ apte à être rassemblé avec une extrémité dépourvue de dit manchon définissant une extrémité femelle 2₃ d'un autre dit même élément de conduite 1₂.

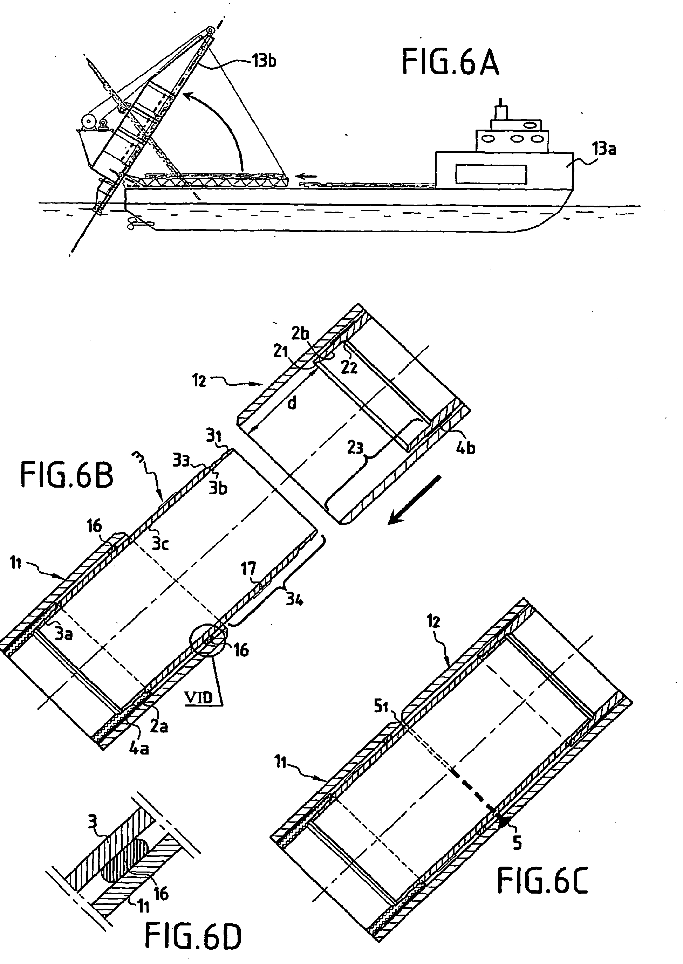

Sur la figure 6 on a représenté l'assemblage entre deux longueurs unitaires de conduite chemisée, lors de l'installation sur site -qui est effectuée à bord d'un navire de pose 13a équipé d'une tour de pose en J 13b, tel que représenté sur la figure 6a. A cet effet, l'élément de conduite terminal 1₁ d'une de conduite chemisée déjà posée est maintenu fixement en suspension en pied de tour, et un nouvel élément de conduite chemisée 1₂ est transféré, de manière connue, de la position horizontale à la position oblique correspondant à l'inclinaison de la tour pour être ensuite positionné dans l'axe de l'élément de conduite terminal 1₁ chemisé. Le dit élément de conduite à assembler 1₂ est ensuite déplacé axialement vers l'élément de conduite terminal 1₁ en suspension. On introduit et insère en force l'extrémité femelle 2₃ dépourvue de manchon tubulaire de jonction d'un élément de conduite à assembler 1₂ autour de l'extrémité mâle 3₄ du manchon tubulaire de jonction fixe qui dépasse de l'élément de conduite terminal 1₁ d'une conduite en cours d'assemblage, dans la direction longitudinale XX' axialement à l'intérieur de la dite extrémité femelle 2₃, puis on réalise le soudage 5 des extrémités non chemisées des parois en acier des deux éléments de conduite bout à bout. La partie supérieure du manchon 3 pénètre dans l'extrémité de l'élément de conduite à assembler 1₂b, jusqu'à venir en contact avec l'extrémité 2₁ de la chemise préalablement usinée avec grande précision. Ledit manchon est inséré contre la partie terminale d'épaisseur réduite 2a, 2b du chemisage jusqu'à ce que l'extrémité 2₁ du chemisage vienne buter contre un épaulement 3₃ délimitant la dite partie centrale 3c du manchon et la dite partie terminale de plus faible épaisseur 3a, 3b du manchon.. L'élément de conduite étant proche de la verticale, son poids propre est suffisant pour permettre alors au manchon de pénétrer complètement la chemise pour atteindre la configuration de la figure 6c, où les deux élément de conduite 1₁, 1₂ sont maintenus à quelques mm de distance, par exemple par de simples cales non représentées, de manière à pouvoir effectuer, de manière connue, la soudure 5. Sur la figure 6c on a représenté en partie haute vers la gauche, les parois des conduites acier chanfreinées 5₁ distantes de quelques mm et en partie droite vers le bas la soudure 5 terminée.

Comme représenté sur les figures 6b, 6d, on installe avantageusement des cales 16, par exemple 3 cales uniformément espacées sur la périphérie du manchon tubulaire de jonction et situées à proximité de la zone de soudage 5, de manière à améliorer l'encastrement dudit manchon 3 dans ladite conduite en acier 1₁. Ces cales sont avantageusement usinées à une cote précise et enfoncées en force par insertion depuis l'extérieur dans l'intervalle compris entre la surface externe de la partie centrale 3c dudit manchon et la surface interne de la paroi en acier de l'extrémité non chemisée 1₁b de l'élément de conduite dont le dit manchon constitue une extrémité male.

Ces cales 16 sont avantageusement réalisées en matériau non conducteur, donc non métallique, et résistent à la température engendrée à leur emplacement considéré, par le processus d'assemblage par soudure à bord du navire d'installation 13a. Ainsi, elles seront réalisées soit en matériaux composites soit en céramique, ou encore plus simplement à partir d'un mortier de sable et de ciment. Dans une version préférée, la fabrication de ces cales sera simplement réalisée par injection à l'aide d'une seringue, d'un volume limité de mortier qui, en s'étalant, par exemple sur une surface 4 cm de diamètre créera in situ ladite cale, sans aucune nécessité d'ajustement préalable de l'épaisseur, bloquant ainsi de manière énergique ledit manchon par rapport à ladite conduite. La figure 6d illustre le détail de ce calage.

Au cas où le poids propre de l'élément de conduite ou rame 1₂ serait insuffisant pour assurer l'insertion naturelle du manchon tubulaire de jonction, on alourdira avantageusement le chariot de manutention de ladite rame au sein de la tour de pose en J, de manière à disposer de la réserve de capacité d'effort suffisante. Dans une version préférée, on utilisera un dispositif de vérins qui, se fixant sur l'extérieur de la rame 1₂ la forcera lors de l'insertion du manchon tubulaire de jonction 3.

Dans une version préférée représentée sur les figures 1 et 6b, on dispose avantageusement autour du manchon tubulaire de jonction un agent passivant 17 avant insertion lors de la fabrication de la rame, ou lors de l'installation au sein de la tour de pose en J; dans ce dernier cas, ledit agent de passivation est positionné dans la zone 3₄.

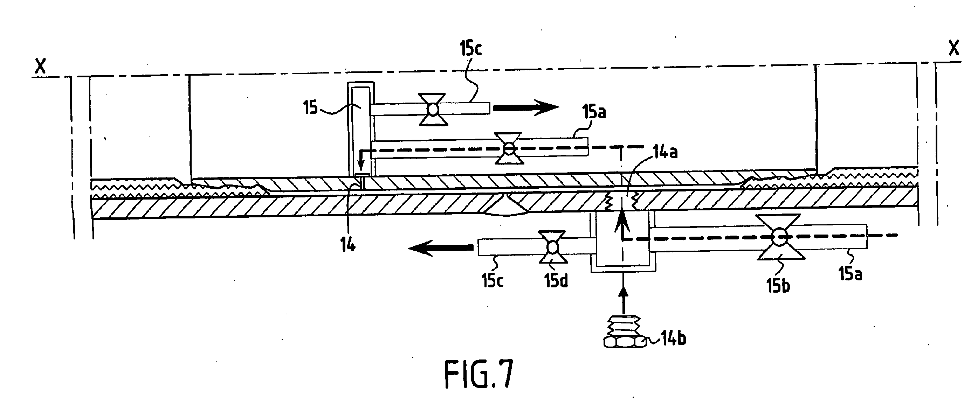

Dans une version préférée représentée sur la figure 7, la chambre annulaire 7 comprise entre le manchon, les extrémités 2₁ des chemises et la paroi de la conduite externe en acier, est injectée à l'aide d'un matériau réticulable quasi-incompressible, tel un polyuréthanne, un époxy, un acrylique, ou encore un gel à consistance épaisse et insoluble dans l'eau, de manière à éliminer toute bulle d'air présente dans ladite chambre. A cet effet, on procède à l'injection du produit soit depuis l'extérieur de la conduite, comme représenté dans la partie basse de la figure 7, soit par l'intérieur, à travers le manchon tubulaire de jonction 3, comme représenté sur la partie haute de la même figure 7. En procédant depuis l'extérieur, on aura préalablement réalisé un trou fileté 14a traversant la paroi et mettant en communication ladite chambre avec l'extérieur. On vient plaquer sur l'extérieur de la conduite, de manière étanche, une chambre à vide 15 muni d'un conduit 15a d'amenée du matériau réticulable et d'une vanne d'isolation 15b, ainsi que d'un conduit 15c de tirage au vide et d'une vanne d'isolation 15d.

La séquence de remplissage est alors :
- on ferme la vanne 15b, on ouvre la vanne 15d, et
- on tire au vide la chambre 7, et
- on ferme la vanne 15d, on ouvre la vanne 15b,
- le matériau réticulable remplit alors intégralement la chambre 7, et
- on démonte la chambre à vide 15, et
- on bouche l'orifice avec le bouchon fileté 14b.

En procédant depuis l'intérieur, on aura préalablement percé dans le manchon tubulaire de jonction 3 un petit trou 14, par exemple de 3 mm de diamètre, et l'on vient de manière similaire installer la chambre à vide 15 munie de ses orifices et de ses vannes d'isolation, et l'on opère l'ensemble selon la séquence détaillée précédemment, et, à la dernière étape, on laisse le trou de remplissage ouvert et on se contente d'éliminer les traces de produit sur la face interne du manchon tubulaire de jonction. Le produit une fois réticulé jouera le rôle d'obturateur.

Dans cette variante d'injection depuis l'intérieur, lors de l'installation sur site, on positionne avantageusement la chambre à vide sur le manchon 3 de l'élément de conduite terminal 1₁ en suspension dans la tour de pose en J, puis, avant de descendre la nouvelle rame 1₂, on connecte l'ombilical, non représenté, servant au contrôle du processus précédemment détaillé, ledit ombilical traversant intégralement la conduite chemisée 1₂ pour sortir au sommet de tour et revenir au poste de commande. Une fois l'injection terminée, un signal de déconnexion est envoyé à travers l'ombilical et, la chambre libérée peut être récupérée au sommet de la tour pour être nettoyée, rechargée et préparée pour le cycle suivant. En procédant ainsi, la chambre à vide peut être de très petites dimensions et sera positionnée et verrouillée en position sans aucune difficulté, car l'opérateur aura une parfaite visibilité de la position de l'orifice 14 lequel sera avantageusement situé à proximité de l'extrémité du manchon 3 de la figure 6b.

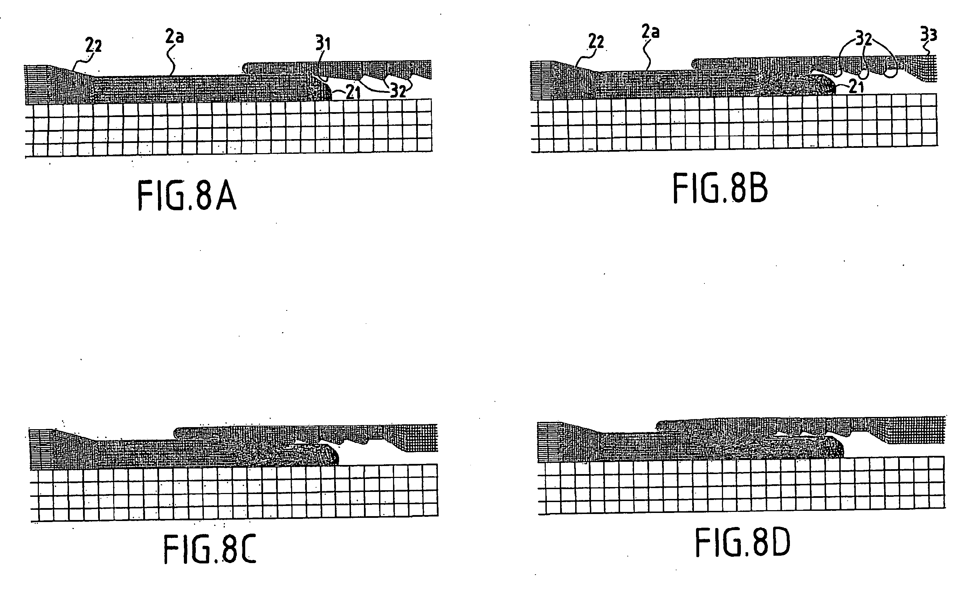

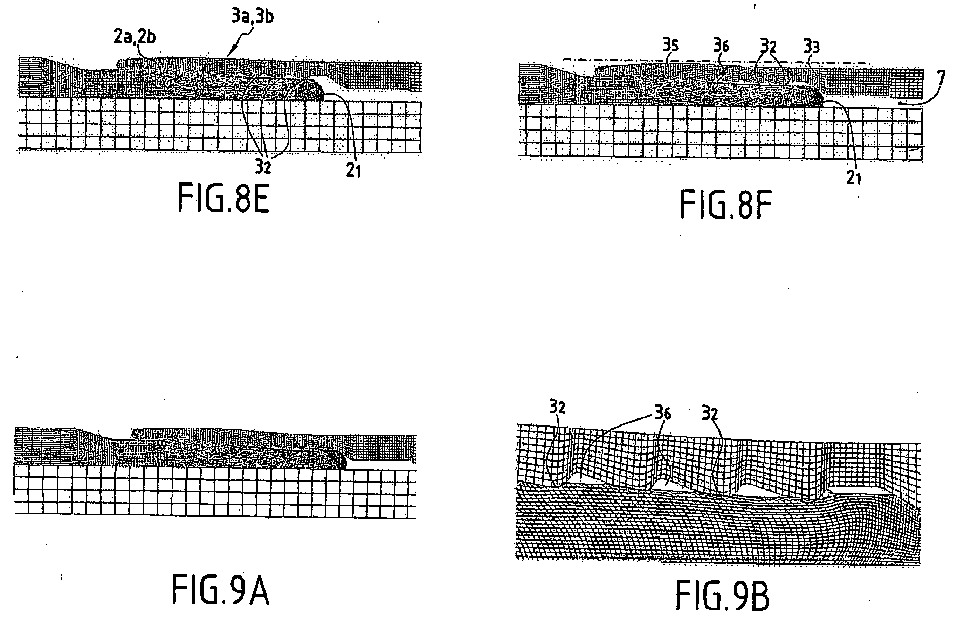

Sur les figures 8a à 8f, on a représenté des schémas illustrant des résultats de calculs en éléments finis des phases successives de l'enfilage du manchon tubulaire de jonction, et illustrant la plastification du matériau thermoplastique de la chemise, ainsi que la déformation élastique du manchon tubulaire de jonction. Ladite déformation du manchon est maximale en haut 3₅ de l'extrémité en biseau 3₁ de la figure 8f, zone correspondant également à la plastification maximale du matériau thermoplastique de la chemise et créant ainsi un anneau d'étanchéité. Les crans 3₂ multiples de la surface externe du manchon tubulaire de jonction plastifient, à un degré moindre, ladite chemise au niveau des sommets des crans 3₂, créant ainsi des anneaux d'étanchéité complémentaires. Ledit manchon tubulaire de jonction vient alors en butée sur la chemise. ledit manchon est inséré contre la partie terminale d'épaisseur réduite 2a, 2b du chemisage jusqu'à ce que l'extrémité 2₁ du chemisage vienne buter contre un épaulement 3₃ délimitant la dite partie centrale 3c du manchon et la dite partie terminale de plus faible épaisseur 3a, 3b du manchon.. La précontrainte ainsi obtenue du manchon tubulaire de jonction, associée à la plastification du matériau thermoplastique, crée alors un encastrement dudit manchon tubulaire de jonction dans la chemise et donc dans la conduite acier. L'axe XX du manchon tubulaire de jonction coïncide alors avec l'axe de la conduite acier, ce qui permet le guidage et facilite grandement l'insertion de la partie femelle 2₃ de l'élément de conduite à assembler dans la partie mâle 3₄ de l'extrémité de l'élément de conduite terminal d'une conduite déjà assemblée, lors de l'installation dans la tour de pose en J telle qu'explicitée précédemment dans les figures 6a-6c.

Au cours du temps, le matériau thermoplastique sera amené à fluer et les cavités 3₆ entre les crans 3₂ seront progressivement, sur plusieurs années, voire plusieurs décennies, comblées par ledit matériau thermoplastique. De la même manière, le manchon tubulaire de jonction présentant en 3₅ une déformation initiale maximale, reprendra par simple élasticité sa forme cylindrique naturelle, jouant ainsi le rôle de ressort et compensant ledit fluage du matériau thermoplastique, continuant ainsi à assurer l'étanchéité de la chambre annulaire 7.

Sur la figure 9a, on a représenté la conduite chemisée soumise à la pression de service P = 50 MPa, alors que la chambre 7 reste sensiblement à la pression atmosphérique. Il en résulte alors une expansion radiale du manchon tubulaire de jonction qui reprend alors seul l'effort d'éclatement dans toute la zone de la chambre 7, la conduite acier n'étant dans ladite zone sensiblement pas sollicité par ledit effet d'éclatement. La figure 9b est un agrandissement de la zone crantée du manchon tubulaire de jonction relatif à la figure 9a et illustre la pénétration des sommets desdits crantages dans le matériau thermoplastique de la chemise, ainsi que le fluage dudit thermoplastique vers la chambre 7 créé par la pression P s'exerçant à l'intérieur de la conduite chemisée en service.

On a décrit le manchon comme étant constitué d'un matériau résistant à la corrosion, plus particulièrement comme étant un matériau métallique, plus particulièrement encore comme étant un alliage inconel, mais on reste dans l'esprit de l'invention en considérant un matériau composite, par exemple un composite carbone ou fibre de verre au sein d'une matrice de liaison par exemple du type époxy ou polyuréthanne. Divers procédés peuvent être envisagés pour sa fabrication, par exemple l'enroulement filamentaire sur mandrin, le surmoulage de fibres organisées par une résine fluide, ou tout autre procédé apte à réaliser des pièces de révolution à forte résistance mécanique.On sélectionnera les résines de manière à ce qu'elles puissent résister à la chaleur engendrée par le soudage des conduites entre elles, lors de l'assemblage des rames sur site, au sein de la tour de pose en J, et l'on intercalera avantageusement un écran thermique, par exemple en fibre de céramique, entre ledit manchon tubulaire et ladite conduite acier, au niveau de la jonction.

On a décrit les extrémités du manchon tubulaire de jonction comme présentant des crantages de révolution, mais on reste dans l'esprit de l'invention si le crantage est un filetage de forme hélicoïdale, et donc constitué d'une seule excroissance effectuant plusieurs tours à la périphérie dudit manchon tubulaire de jonction. Ainsi, la mise en place du manchon tubulaire de jonction sur le site de préfabrication pourra se faire soit par enfoncement à l'aide d'une presse comme explicité précédemment, soit par vissage jusqu'à ce que ledit manchon tubulaire de jonction vienne buter sur la tranche de la chemise. De la même manière, l'installation sur site au sein de la tour de pose en J, se fera soit par enfoncement direct, soit par vissage, la surface crantée de la seconde extrémité du manchon tubulaire de jonction pouvant être soit de révolution, soit de forme hélicoïdale.

## Revendications

1. Elément de conduite à chemisage interne (1₁, 1₂) utile pour réaliser une conduite par assemblage d'au moins 2 dits éléments de conduite (1₁, 1₂) à chemisage interne assemblés bout à bout, dans laquelle les extrémités des deux éléments de conduite sont soudées (5) l'une à l'autre, **caractérisé en ce qu'**il comprend :
- un chemisage interne en matériau plastique (2), de préférence thermoplastique, présentant à chaque extrémité une partie terminale (2a, 2b) d'épaisseur réduite par rapport à l'épaisseur de la partie courante (2c) dudit chemisage, définissant une surface interne de révolution de diamètre interne plus grand que celui de la partie courante (2c) dudit chemisage et se terminant à une certaine distance (d) de l'extrémité du dit élément de conduite, et
- un unique manchon tubulaire de jonction (3) en matériau résistant à la corrosion, de préférence du type acier inox ou alliage inconel, sensiblement de même diamètre interne que ledit chemisage, ledit manchon présentant à chacune de ses extrémités une partie terminale (3a, 3b) d'épaisseur réduite par rapport à l'épaisseur de la partie centrale (3c) dudit manchon, lesdites parties terminales (3a, 3b) du manchon définissant une surface externe de diamètre externe inférieur à celui de la partie centrale (3c) du manchon et une surface interne cylindrique sensiblement de même diamètre interne que celui des surfaces internes cylindriques de la partie courante du chemisage et de la partie centrale (3c) du manchon, ledit manchon tubulaire de jonction (3) étant inséré à seulement une extrémité dudit élément de conduite et dépassant de celle-ci, le dépassement dudit manchon définissant une extrémité mâle (3₄) dudit élément de conduite (1₁) apte à être assemblé avec une extrémité dépourvue de dit manchon définissant une extrémité femelle (2₃) d'un autre dit même élément de conduite (1₂)
**caractérisé en ce que**
- la surface externe de chaque dite partie terminale (2a, 2b) d'épaisseur réduite du chemisage interne est verrouillée par collage (4a, 4b) de l'extrémité du chemisage au niveau ou à proximité de ladite partie terminale (2a, 2b) d'épaisseur réduite du chemisage contre la surface interne correspondante de la paroi en acier de la conduite, à l'aide d'une colle de préférence du type époxy ou polyuréthanne, et
- ladite surface externe de chaque partie terminale (3a, 3b) dudit manchon est une surface crantée (3₂), de préférence avec une extrémité sensiblement effilée en biseau (3₁) permettant son insertion et ancrage contre la surface interne de la partie terminale (2a, 2b)d'é-paisseur réduite du chemisage correspondante, réalisant ainsi une liaison mécanique entre les deux dites surfaces externe du manchon et interne du chemisage, par simple encastrement en force dudit manchon dans la direction longitudinale axiale XX' à l'intérieur dudit élément de conduite, et
- le diamètre externe de ladite partie centrale (3c) cylindrique du manchon est inférieure au diamètre interne des extrémités non chemisées (1₁a-1₁b, 1₂a-1₂b) de paroi en acier dudit élément de conduite de sorte que ledit manchon n'est pas en contact direct avec lesdites parois en acier et délimite avec les parois de celle-ci et entre les extrémités (2₁) des chemises encadrant ledit manchon, une chambre annulaire (7) lorsque deux dits éléments de conduite (1₁, 1₂) à chemisage interne assemblés bout à bout avec un dit manchon intercalé à l'intérieur des extrémités bout à bout des deux éléments de conduite, de manière à chevaucher lesdites parties terminales (2a, 2b) d'épaisseur réduite des deux chemisages.

2. Elément de conduite selon la revendication 1, **caractérisée en ce que** ledit manchon est inséré contre la partie terminale d'épaisseur réduite (2a, 2b) du chemisage jusqu'à ce que l'extrémité (2₁) du chemisage vienne buter contre un épaulement (3₃) délimitant la dite partie centrale (3c) du manchon et la dite partie terminale de plus faible épaisseur (3a, 3b) du manchon.

3. Elément de conduite selon la revendication 1 ou 2, **caractérisée en ce que** ledit manchon est inséré contre la partie terminale d'épaisseur réduite (2a, 2b) du chemisage jusqu'à ce que l'extrémité (3₁) du manchon vienne buter contre l'épaulement (2₂) délimitant la partie courante et la dite partie terminale (2a, 2b) d'épaisseur réduite du chemisage.

4. Conduite (1) comprenant au moins 2 éléments de conduite (1₁, 1₂) à chemisage interne selon l'une des revendications 1 à 3, assemblés bout à bout, dans laquelle les extrémités des deux éléments de conduite sont soudées (5) l'une à l'autre et un dit manchon tubulaire de jonction (3) étant intercalé à l'intérieur des extrémités bout à bout des deux éléments de conduite, de manière à chevaucher lesdites parties terminales (2a, 2b) d'épaisseur réduite des deux chemisages.

5. Conduite selon la revendication 4, **caractérisée en ce que** ladite chambre annulaire (7) est remplie d'un matériau réticulable quasi-incompressible ou un gel à consistance épaisse insoluble dans l'eau.

6. Conduite selon l'une des revendications 4 ou 5, **caractérisée en ce qu'**il s'agit d'une conduite apte à être posée en milieu sous-marin à grande profondeur, de préférence jusqu'à 3000 m, et lesdits éléments de conduite ont une longueur de 20 à 50 m.

7. Conduite selon l'une des revendications 4 à 6, **caractérisée en ce qu'**il s'agit d'une conduite destinée à l'injection d'eau.

8. Procédé de réalisation d'une conduite selon l'une des revendications 4 à 7, par assemblage de dits éléments de conduites, **caractérisé en ce que** l'on introduit et insère en force l'extrémité femelle (2₃) dépourvue de manchon tubulaire de jonction d'un élément de conduite à assembler (1₂) autour de l'extrémité mâle (3₄) du manchon tubulaire de jonction fixe qui dépasse de l'élément de conduite terminal (1₁) d'une conduite en cours d'assemblage, puis on réalise le soudage (5) des extrémités non chemisées (1₁a, 1₂a, 1₁b, 1₂b) des parois en acier des deux éléments de conduite bout à bout.

9. Procédé selon la revendication 8, **caractérisé en ce que** l'on injecte un dit matériau réticulable ou dit gel à travers un trou (14, 14a) préalablement percé dans la paroi dudit manchon ou ladite paroi en acier de la conduite et par l'intermédiaire d'une chambre à vide (15) adapté au regard dudit trou, après avoir réalisé le vide dans ladite chambre annulaire (7), puis on démonte ladite chambre à vide et on bouche ledit trou.

10. Procédé de réalisation d'un élément de conduite selon l'une des revendications 1 à 3, **caractérisé en ce que** l'on réalise les étapes suivantes comprenant :
1- ledit chemisage interne en introduisant, par une première extrémité d'un élément de conduite, une conduite en matériau thermoplastique souple et élastique en forme de conduite à section circulaire (7₁) ou pliée en forme de haricot (7₂), destinée à former ladite chemise, et en la tirant à l'intérieur dudit élément de conduite jusqu'à la seconde extrémité de l'élément de conduite, puis on relâche la traction pour permettre son expansion radiale et son collage contre la surface interne de la paroi dudit élément de conduite, et
2- le découpage et l'usinage des extrémités de ladite conduite de chemisage de façon à former desdites parties terminales d'épaisseur réduite (2a, 2b) de ladite chemise interne et une partie terminale non chemisée (1₁a-1₁b, 1₂a-1₂b) de la paroi en acier dudit élément de conduite à chacune de ses extrémités.

11. Procédé selon la revendication 10, **caractérisé en ce que,** la surface externe de la conduite thermoplastique de chemisage est revêtue de colle (4a, 4c) dans au moins une zone située à l'extérieur dudit élément de conduite, au moins du côté de ladite première extrémité dudit élément de conduite et destinée à être positionnée après relâchement de la traction et rétractation complète de ladite conduite de chemisage, à proximité ou au niveau des parties terminales d'épaisseur réduite (2a, 2b) du chemisage.

12. Procédé selon la revendication 11, **caractérisé en ce que** la surface externe de la conduite thermoplastique de chemisage est revêtue de colle (4a, 4c) dans deux zones (6a, 6c) situées à l'extérieur dudit élément de conduite, respectivement des deux côtés desdites première et deuxième extrémités dudit élément de conduite, et destinées à être positionnées après relâchement de la traction et rétractation complète de ladite conduite de chemisage, à proximité ou au niveau de chacune desdites parties terminales d'épaisseur réduite (2a, 2b) du chemisage.

13. Procédé selon la revendication 12, **caractérisé en ce que,** avant l'étape 1-, la surface interne de ladite seconde extrémité de l'élément de conduite est revêtue d'une colle (4b) dans une première zone destinée à se trouver en vis-à-vis d'une première zone correspondante (6b) dudit chemisage correspondant à la proximité ou au niveau de ladite partie terminale d'épaisseur réduite (2b) du chemisage après usinage, et la surface externe de la conduite thermoplastique de chemisage est revêtue de colle (4a) à proximité ou au niveau d'une deuxième zone (6a) dudit chemisage destinée à former ladite partie terminale d'épaisseur réduite (2a) du chemisage du coté de ladite première extrémité dudit élément de conduite après usinage.

14. Procédé selon l'une des revendications 11 à 13, **caractérisé en ce que** l'on réalise un traitement par un plasma froid, à l'aide d'un dispositif (10a) situé à l'extérieur dudit élément de conduite, sur les zones (6a, 6b, 6c) des surfaces externes de la conduite thermoplastique de chemisage destinées à être encollées (4a, 4c) ou destinées à être appliquées contre une zone encollée (4b) de la paroi en acier d'un dit élément de conduite, pour favoriser l'efficacité du collage.

15. Procédé selon les revendications 13 et 14, **caractérisé en ce que** la surface externe de la conduite thermoplastique de chemisage est traitée par un plasma froid au niveau d'une dite première zone (6b) de ladite conduite souple de chemisage destinée à être collée avec une dite première zone encollée (4b) de la surface interne de la paroi en acier de ladite seconde extrémité dudit élément de conduite d'une part, et d'autre part, au niveau d'une seconde zone (6a) de la surface externe de ladite conduite souple de chemisage destinée à être ensuite encollée (4a), ledit traitement au plasma étant réalisé avant introduction de ladite conduite souple de chemisage à l'intérieur dudit élément de conduite.

16. Procédé selon la revendication 15, **caractérisé en ce que** l'on réalise ledit traitement plasma au niveau de ladite première zone (6b) de ladite conduite souple de chemisage selon une longueur (D) supérieure à la somme de la longueur de rétractation (δL) de la dite conduite souple après relâchement de la traction sur ladite conduite de chemisage, additionnée de celle (D1) de ladite première zone encollée (4b) de la surface interne de la paroi en acier à ladite seconde extrémité de l'élément de conduite de façon à ce que lesdites premières zones (6b-4b) se chevauchent sur toutes leurs longueurs depuis l'arrêt de la traction jusqu'à la rétractation complète de ladite conduite de chemisage après relâchement de ladite traction.

17. Procédé selon l'une des revendications 10 à 16, **caractérisé en ce que,** avant l'étape 1-, on réalise le chauffage(10b) de ladite conduite thermoplastique de chemisage pour faciliter son étirement à diamètre réduit.

## Claims

1. A pipe element having an internal liner (1₁, 1₂) useful for producing a pipe by assembling at least two said pipe elements (1₁, 1₂) with internal liner, assembled end to end, in which the ends of both pipe elements are welded (5) to each other, **characterized in that** it comprises:
- an inner liner in plastic material (2), preferably in thermoplastic material, having at each end a terminal portion (2a, 2b) of reduced thickness relatively to the thickness of the standard portion (2c) of said liner, defining an internal surface of revolution with a larger inner diameter than the inner diameter of the standard portion (2c) of said liner and terminating at a certain distance (d) from the end of said pipe element; and
- a single tubular junction sleeve (3) in corrosion-resistant material, preferably of the stainless steel or Inconel alloy type, having substantially the same inner diameter as said liner, said sleeve having at each of its ends, a terminal portion (3a, 3b) with reduced thickness relatively to the thickness of the central portion (3c) of said sleeve, said terminal portions (3a, 3b) of the sleeve defining an outer surface with an outer diameter smaller than that of the central portion (3c) of the sleeve, and a cylindrical internal surface with substantially the same inner diameter as that of the cylindrical inner surfaces of the standard portion of the liner and of the central portion (3c) of the sleeve, said single tubular junction sleeve (3) being inserted at only one end of said pipe element and jutting out from the latter, the jutting-out of said sleeve defining a male end (3₄) of said pipe element (1₁), capable of being assembled with an end lacking said sleeve defining a female end (2₃) of another said same pipe element (1₂),
**characterized in that:**
- the outer surface of each said terminal portion (2a, 2b) with reduced thickness of the inner liner is locked by adhesive bonding (4a, 4b) of the end of the liner at or in proximity to said terminal portion (2a, 2b) with reduced thickness of the liner against the corresponding inner surface of the steel wall of the pipe, using an adhesive preferably of the polyurethane or epoxy type, and
- said outer surface of each terminal portion (3a, 3b) of said sleeve is a notched surface (3₂), preferably with an end substantially tapered to a chamfer (3₁) enabling it to be inserted and anchored against the inner surface of the terminal portion (2a, 2b) with reduced thickness of the corresponding liner, thereby providing a mechanical connection between both said outer surface of the sleeve and said inner surface of the liner, merely by force-fitting said sleeve in the axial longitudinal direction XX' into the inside of said pipe element, and
- the outer diameter of said cylindrical central portion (3c) of the sleeve is smaller than the inner diameter of the steel wall non-lined ends (1₁a-1₁b, 1₂a-1₂b) of said pipe element so that said sleeve does not directly come into contact with said steel walls, and delimits with the walls of the latter and between the ends (2₁) of the liners on either side of the sleeve an annular chamber (7) when both said pipe elements (1₁, 1₂) with an inner liner, assembled end to end with a so-called sleeve inserted inside the end-to-end extremities of both pipe elements, so as to overlap said terminal portions with reduced thickness of both liners (2a, 2b).

2. The pipe element according to claim 1, **characterized in that** said sleeve is inserted against the terminal portion (2a, 2b) with reduced thickness of the liner until the end (2₁) of the liner comes into abutment against a shoulder (3₃) delimiting said central portion (3c) of the sleeve and said terminal portion (3a, 3b) with smaller thickness of the sleeve.

3. The pipe element according to claim 1 or 2, **characterized in that** said sleeve is inserted against the terminal portion (2a, 2b) with reduced thickness of the liner until the end (3₁) of the sleeve comes into abutment against the shoulder (2₂) delimiting the standard portion and said terminal portion (2a, 2b) with reduced thickness of the liner.

4. A pipe (1) comprising at least 2 pipe elements (1₁, 1₂) with an inner liner according to any of claims 1 to 3, assembled end to end, in which the ends of both pipe elements are welded (5) to each other and a so-called tubular junction sleeve (3) is inserted inside the end-to-end extremities of both pipe elements so as to overlap said terminal portions with reduced thickness of both liners (2a, 2b).

5. The pipe according to claim 4, **characterized in that** said annular chamber (7) is filled with a practically incompressible cross-linkable material or a water-insoluble gel of thick consistency.

6. The pipe according to any of claims 4 or 5, **characterized in that** it is a pipe suitable for being laid at great depth in the sea, preferably down to 3000 m, and said pipe elements have a length from 20 m to 50 m.

7. The pipe according to any of claims 4 to 6, **characterized in that** it is a pipe intended for injecting water.

8. A method for making a pipe according to any of claims 4 to 7, by assembling so-called pipe elements, **characterized in that** the female end (2₃) without a tubular junction sleeve of a pipe element (1₂) to be assembled is introduced and force-fitted around the male end (3₄) of the fixed tubular junction sleeve which juts out from the terminal pipe element (1₁) of a pipe which is being assembled, and then the non-lined ends (1₁a, 1₂a, 1₁b, 1₂b) of the steel walls of the two pipe elements are butt-welded (5) together.

9. The method according to claim 8, **characterized in that** a so-called cross-linkable material or so-called gel is injected through a hole (14, 14a) previously pierced through the wall of said sleeve or said steel wall of the pipe, and via a vacuum chamber (15) fitted so as to be facing said hole, after a vacuum has been established in said annular chamber (7), and then said vacuum chamber is removed and said hole is plugged.

10. A method for making a pipe element according to any of claims 1 to 3, **characterized in that** the following steps are performed:
1- said internal liner is provided by introducing through a first end of a pipe element, a pipe in flexible and elastic thermoplastic material as a circular section pipe (7₁) or folded to a kidney shape (7₂), intended to form said liner, and by pulling it inside said pipe element as far as the second end of the pipe element, and then by releasing traction so that it may expand radially and become adhesively bonded against the inner surface of the wall of said pipe element, and
2- cutting out and machining the ends of said liner pipe so as to form said terminal portions (2a, 2b) with reduced thickness of said lining and a non-lined terminal portion (1₁a-1₁b, 1₂a-1₂b) of the steel wall of said pipe element at each of its ends.

11. The method according to claim 10, **characterized in that** the outer surface of the thermoplastic liner pipe is coated with adhesive (4a, 4c) in at least one area located outside said pipe element, at least on the side of said first end of said pipe element and intended to be positioned after release of the traction and after complete retraction of said liner pipe, in proximity to or at the terminal portions (2a, 2b) with reduced thickness of the liner.

12. The method according to claim 11, **characterized in that** the outer surface of the thermoplastic liner pipe is coated with adhesive (4a, 4c) in two areas (6a, 6c) located outside said pipe element, on both sides of said first and second ends of said pipe element respectively, and intended to be positioned, after release of the traction and after complete retraction of said liner pipe, in proximity to or at the terminal portions (2a, 2b) with reduced thickness of the liner.

13. The method according to claim 12, **characterized in that,** prior to step 1-, the inner surface of said second end of the pipe element is coated with an adhesive (4b) in a first area intended to be facing a corresponding first area (6b) of said liner corresponding to the proximity of or at said terminal portion (2b) with reduced thickness of the liner after machining, and the outer surface of the thermoplastic liner pipe is coated with adhesive (4a) in proximity to or at a second area (6a) of said liner intended to form said terminal portion (2a) with reduced thickness of the liner on the side of said first end of said pipe element after machining.

14. The method according to any of claims 11 to 13, **characterized in that** cold plasma treatment is performed using a device (10a) located outside said pipe element on the areas (6a, 6b, 6c) of the outer surfaces of the thermoplastic liner pipe intended to be coated with adhesive (4a, 4c) or intended to be pressed against an adhesive-coated area (4b) of the steel wall of a so-called pipe element, for promoting adhesive bonding effectiveness.

15. The method according to claims 13 and 14, **characterized in that** the outer surface of the thermoplastic liner pipe is treated with a cold plasma firstly in a so-called first area (6b) of said flexible liner pipe intended to be adhesively-bonded to a so-called first adhesive-coated area (4b) of the inner surface of the steel wall of said second end of said pipe element on the one hand, and on the other hand, at a second area (6a) of the outer surface of said flexible liner pipe intended to be coated with an adhesive (4a), said plasma treatment being performed prior to introducing said flexible liner pipe inside said pipe element.

16. The method according to claim 15, **characterized in that** said plasma treatment is performed at said first area (6b) of said flexible liner pipe over a length (D) that is greater than the sum of the retraction length (δL) of said flexible pipe after release of traction on said liner pipe, plus the length (D1) of said first adhesive-coated area (4b) of the inner surface of the steel wall at said second end of the pipe element, so that said first areas (6b-4b) overlap over their full lengths from the moment of stopping traction until full retraction of said liner pipe after release of said traction.

17. The method according to any of claims 10 to 16, **characterized in that,** prior to step 1-, said thermoplastic liner pipe is heated (10b) so as to facilitate its stretching to a smaller diameter.

## Patentansprüche

1. Rohrleitungselement mit Innenmantel (1₁, 1₂) für die Ausbildung einer Rohrleitung durch Zusammenfügen von wenigstens zwei stumpf verbundenen Rohrleitungselementen (1₁, 1₂) mit Innenmantel, bei der die Enden der beiden Rohrleitungselemente aneinander geschweißt sind (5), **dadurch gekennzeichnet, daß** es folgendes umfaßt:
- einen Innenmantel aus Kunststoff (2), vorzugsweise aus Thermoplast, der an jedem Ende einen Endteil (2a, 2b) mit im Vergleich zur Dicke des durchgehenden Teils (2c) des Mantels reduzierter Dicke aufweist, der eine Rotationsinnenfläche definiert, deren Innendurchmesser größer als der des durchgehenden Teils (2c) des Mantels ist und der in einem gewissen Abstand (d) von dem Ende des Rohrleitungselements endet, und
- eine einzige röhrenförmige Verbindungsmuffe (3) aus korrosionsbeständigem Material, vorzugsweise von der Art rostfreier Stahl oder Inconel-Legierung, mit im wesentlichen dem gleichen Innendurchmesser wie der Mantel, wobei die Muffe an jedem ihrer Enden einen Endteil (3a, 3b) mit im Vergleich zur Dicke des Mittelteils (3c) der Muffe reduzierter Dicke aufweist, wobei die Endteile (3a, 3b) der Muffe eine Außenseite mit geringerem Außendurchmesser als der Mittelteil (3c) der Muffe und eine zylindrische Innenseite mit im wesentlichen gleichem Innendurchmesser wie die zylindrischen Innenseiten des durchgehenden Teils des Mantels und des Mittelteils (3c) der Muffe definieren, wobei die röhrenförmige Verbindungsmuffe (3) an nur einem Ende des Rohrleitungselements eingesetzt wird und dieses überragt, wobei der Überstand der Muffe ein Einsteckende (3₄) des Rohrleitungselements (1₁) definiert, das geeignet ist, mit einem muffenlosen Ende, das ein Aufnahmeende (2₃) eines weiteren Rohrleitungselements (1₂) definiert, verbunden zu werden,
**dadurch gekennzeichnet, daß**
- die Außenseite eines jeden Endteils reduzierter Dicke (2a, 2b) des Innenmantels durch Verkleben (4a, 4b) des Endes des Mantels im Bereich oder in der Nähe des Endteils reduzierter Dicke (2a, 2b) des Mantels an der entsprechenden Innenseite der Stahlwand der Rohrleitung mit Hilfe eines Klebers, vorzugsweise vom Typ Epoxid oder Polyurethan, blockiert ist, und
- die Außenseite eines jeden Endteils (3a, 3b) der Muffe eine Rastenfläche (3₂), vorzugsweise mit einem sich im wesentlichen abgeschrägt verjüngenden Ende (3₁) ist, das sein Einführen und Verankern an der Innenseite des entsprechenden Endteils reduzierter Dicke (2a, 2b) des Mantels ermöglicht, wodurch eine mechanische Verbindung zwischen den beiden Seiten, nämlich der Außenseite der Muffe und der Innenseite des Mantels durch einfaches Hineindrücken der Muffe in der axialen Längsrichtung XX' in das Rohrleitungselement hergestellt wird, und
- der Außendurchmesser des zylindrischen Mittelteils (3c) der Muffe kleiner ist als der Innendurchmesser der nicht ummantelten Enden (1₁a-1₁b, 1₂a-1₂b) der Stahlwand des Rohrleitungselements, so daß die Muffe nicht in direktem Kontakt mit den Stahlwänden ist und mit den Wänden sowie zwischen den Enden (2₁) der die Muffe umgebenden Mäntel einen ringförmigen Raum (7) begrenzt, wenn zwei Rohrleitungselemente (1₁, 1₂) mit Innenmantel aneinander gefügt sind und eine Muffe derart innerhalb der aneinander liegenden Enden der beiden Rohrleitungselemente eingesetzt ist, daß sie die Endteile reduzierter Dicke (2a, 2b) der beiden Mäntel übergreift.

2. Rohrleitungselement nach Anspruch 1, **dadurch gekennzeichnet, daß** die Muffe an dem Endteil reduzierter Dicke (2a, 2b) des Mantels soweit eingesetzt wird, bis das Ende (2₁) des Mantels an einer Schulter (3₃) anschlägt, die den Mittelteil (3c) der Muffe und den Endteil geringerer Dicke (3a, 3b) der Muffe begrenzt.

3. Rohrleitungselement nach Anspruch 1 oder 2, **dadurch gekennzeichnet, daß** die Muffe an dem Endteil reduzierter Dicke (2a, 2b) des Mantels soweit eingesetzt wird, bis das Ende (3₁) der Muffe an der Schulter (2₂) anschlägt, die den durchgehenden Teil und den Endteil (2a, 2b) reduzierter Dicke des Mantels begrenzt.

4. Rohrleitung (1), die wenigstens zwei stumpf verbundene Rohrleitungselemente (1₁, 1₂) mit Innenmantel nach einem der Ansprüche 1 bis 3 umfaßt, bei der die Enden der beiden Rohrleitungselemente aneinandergeschweißt sind (5) und wobei eine röhrenförmige Verbindungsmuffe (3) derart innerhalb der aneinanderliegenden Enden der beiden Rohrleitungselemente eingesetzt ist, daß sie die Endteile reduzierter Dicke (2a, 2b) der beiden Mäntel übergreift.

5. Rohrleitung nach Anspruch 4, **dadurch gekennzeichnet, daß** der ringförmige Raum (7) mit einem vernetzbaren, quasi nicht komprimierbaren Material oder einem wasserunlöslichen Gel mit dickflüssiger Konsistenz gefüllt ist.

6. Rohrleitung nach einem der Ansprüche 4 oder 5, **dadurch gekennzeichnet, daß** es sich um eine Rohrleitung handelt, die geeignet ist, im Unterseebereich in großer Tiefe, vorzugsweise bis zu 3000 m verlegt zu werden, und daß die Rohrleitungselemente eine Länge zwischen 20 und 50 m aufweisen.

7. Rohrleitung nach einem der Ansprüche 4 bis 6, **dadurch gekennzeichnet, daß** es sich um eine Rohrleitung handelt, die für das Einspritzen von Wasser bestimmt ist.

8. Verfahren zur Herstellung einer Rohrleitung nach einem der Ansprüche 4 bis 7, durch Zusammenfügen von Rohrleitungselementen, **dadurch gekennzeichnet, daß** das keine röhrenförmige Verbindungsmuffe aufweisende Aufnahmeende (2₃) eines zu verbindenden Rohrleitungselements (1₂) um das Einsteckende (3₄) der festen röhrenförmigen Verbindungsmuffe, das von dem endseitigen Rohrleitungselement (1₁) einer gerade zusammengefügten Rohrleitung vorragt, eingeführt und fest angebracht wird, anschließend das Verschweißen (5) der nicht ummantelten Enden (1₁a, 1₂a,1₁b, 1₂b) der Stahlwände der beiden aneinandergefügten Rohrleitungselemente durchgeführt wird.

9. Verfahren nach Anspruch 8, **dadurch gekennzeichnet, daß** ein vernetzbares Material oder Gel durch ein zuvor in der Wand der Muffe oder der Stahlwand der Rohrleitung ausgebildetes Loch (14, 14a) und mittels einer geeigneten, dem Loch gegenüberliegenden Vakuumkammer (15) eingespritzt wird, nachdem der ringförmige Raum (7) evakuiert worden ist, anschließend die Vakuumkammer entfernt und das Loch verschlossen wird.

10. Verfahren zur Ausbildung eines Rohrleitungselements nach einem der Ansprüche 1 bis 3, **dadurch gekennzeichnet, daß** die folgenden Schritte durchgeführt werden, die folgendes umfassen:
1- die Innenummantelung, indem über ein erstes Ende eines Rohrleitungselements ein Rohr aus einem flexiblen und elastischen thermoplastischen Material in Form eines Rohrs mit kreisförmigem Querschnitt (7₁) oder eines bohnenförmig gebogenen Rohrs (7₂) eingeführt wird, das dazu bestimmt ist, den Mantel zu bilden, und indem dieses in dem Rohrleitungselement bis zum zweiten Ende des Rohrleitungselements gezogen wird, anschließend der Zug aufgehoben wird, um dessen radiale Ausdehnung sowie dessen Verkleben an der Innenseite der Wand des Rohrleitungselements zu ermöglichen, und
2- das Zuschneiden und Bearbeiten der Enden des Ummantelungsrohrs derart, daß Endteile reduzierter Dicke (2a, 2b) des Innenmantels sowie ein nicht ummanteltes Endteil (1₁a-1₁b, 1₂a-1₂b) der Stahlwand des Rohrleitungselements an jedem seiner Enden gebildet werden.

11. Verfahren nach Anspruch 10, **dadurch gekennzeichnet, daß** die Außenseite des thermoplastischen Ummantelungsrohrs in wenigstens einem Bereich, der sich außerhalb des Rohrleitungselements, wenigstens auf der Seite des ersten Endes des Rohrleitungselements befindet und der dazu bestimmt ist, nach dem Aufheben des Zugs und dem vollständigen Zusammenziehen des Ummantelungsrohrs in der Nähe oder im Bereich der Endteile reduzierter Dicke (2a, 2b) des Mantels positioniert zu werden, mit Kleber (4a, 4c) überzogen wird.

12. Verfahren nach Anspruch 11, **dadurch gekennzeichnet, daß** die Außenseite des thermoplastischen Ummantelungsrohrs in zwei Bereichen (6a, 6c), die sich außerhalb des Rohrleitungselements, auf beiden Seiten des ersten bzw. des zweiten Endes des Rohrleitungselements befinden und die dazu bestimmt sind, nach dem Aufheben des Zugs und dem vollständigen Zusammenziehen des Ummantelungsrohrs in der Nähe oder im Bereich eines jeden der Endteile reduzierter Dicke (2a, 2b) des Mantels positioniert zu werden, mit Kleber (4a, 4c) überzogen wird.

13. Verfahren nach Anspruch 12, **dadurch gekennzeichnet, daß** vor Schritt 1- die Innenseite des zweiten Endes des Rohrleitungselements in einem ersten Bereich mit einem Kleber (4b) überzogen wird, welcher Bereich dazu bestimmt ist, sich gegenüber einem ersten entsprechenden Bereich (6b) des Mantels zu befinden, welcher der Nähe oder dem Bereich des Endteils reduzierter Dicke (2b) des Mantels nach dem Bearbeiten entspricht, und die Außenseite des thermoplastischen Ummantelungsrohrs in der Nähe oder im Bereich eines zweiten Bereichs (6a) des Mantels mit Kleber (4a) überzogen wird, welcher Bereich dazu bestimmt ist, den Endteil verringerte Dicke (2a) des Mantels auf der Seite des ersten Endes des Rohrleitungselements nach dem Bearbeiten zu bilden.

14. Verfahren nach einem der Ansprüche 11 bis 13, **dadurch gekennzeichnet, daß** an den Bereichen (6a, 6b, 6c) der Außenseiten des thermoplastischen Ummantelungsrohrs, die dazu bestimmt sind, mit Kleber (4a, 4c) bestrichen zu werden oder dazu bestimmt sind, an einen kleberbeschichteten Bereich (4b) der Stahlwand eines Rohrleitungselements angelegt zu werden, eine Kaltplasmabehandlung mit Hilfe einer außerhalb des Rohrleitungselements befindlichen Vorrichtung (10a) durchgeführt wird, um die Wirksamkeit der Klebeverbindung zu begünstigen.

15. Verfahren nach den Ansprüchen 13 und 14, **dadurch gekennzeichnet, daß** die Außenseite des thermoplastischen Ummantelungsrohrs einerseits im Bereich eines ersten Bereichs (6b) des flexiblen Ummantelungsrohrs, welcher dazu bestimmt ist, mit einem ersten kleberbeschichteten Bereich (4b) der Innenseite der Stahlwand des zweiten Endes des Rohrleitungselements verklebt zu werden, und andererseits im Bereich eines zweiten Bereichs (6a) der Außenseite des flexiblen Ummantelungsrohrs, welcher dazu bestimmt ist, anschließend mit Kleber bestrichen zu werden (4a), mit einem Kaltplasma behandelt wird, wobei die Plasmabehandlung vor dem Einführen des flexiblen Ummantelungsrohrs in das Rohrleitungselement durchgeführt wird.

16. Verfahren nach Anspruch 15, **dadurch gekennzeichnet, daß** die Plasmabehandlung im Bereich des ersten Bereichs (6b) des flexiblen Ummantelungsrohrs entlang einer Länge (D), welche größer ist als die Summe der Schrumpflänge (δL) des flexiblen Rohrs nach Aufheben des Zugs an dem Ummantelungsrohr, plus derjenigen (D1) des ersten kleberbeschichteten Bereichs (4b) der Innenseite der Stahlwand am zweiten Ende des Rohrleitungselements durchgeführt wird, so daß sich die ersten Bereiche (6b-4b) vom Stoppen des Ziehvorgangs bis zum vollständigen Zusammenziehen des Ummantelungsrohrs nach Aufheben des Zugs über ihre gesamten Längen überlappen.

17. Verfahren nach einem der Ansprüche 10 bis 16, **dadurch gekennzeichnet, daß** vor Schritt 1- das Erhitzen (10b) des thermoplastischen Ummantelungsrohrs durchgeführt wird, um dessen Strecken auf kleineren Durchmesser zu erleichtern.
